# EUROPEAN PATENT APPLICATION

(11) **EP 4 767 834 A1**
(43) Date of publication of application: **01.07.2026**
(21) Application number: 24856455.1
(22) Date of filing: 20.08.2024
(51) Int. Cl.: A23L 27/00

(54) **SWEETENER COMPOSITION AND TASTE-IMPROVING AGENT**

(30) Priority: 21.08.2023 JP 2023134086
(71) Applicant: AJINOMOTO CO., INC., Chuo-ku Tokyo 104-8315 (JP)
(72) Inventor: KITAJIMA, Seiji, Kawasaki-shi, Kanagawa 210-8681 (JP); MIZUNO, Riko, Kawasaki-shi, Kanagawa 210-8681 (JP); KANNO, Kyoko, Kawasaki-shi, Kanagawa 210-8681 (JP)
(74) Representative: Strehl & Partner mbB
(86) International application number: PCT/JP2024/029494
(87) International publication number: WO 2025/041767

(57) **Abstract**

The present invention provides a sweetener composition with improved taste quality of a sweet substance. The present invention relates to a sweetener composition containing the following components (A), (B), and (C): (A) at least one γ-glutamyl peptide selected from the group consisting of a compound represented by the formula (I): γ-Glu-X-Gly (I) wherein X is an amino acid residue or an amino acid derivative residue, and a compound represented by the formula (II): γ-Glu-Y (II) wherein Y is an amino acid residue or an amino acid derivative residue, or a salt thereof, (B) at least one compound selected from the group consisting of naringenin, hesperetin, and pinocembrin, or a salt thereof, and (C) a sweet substance.

## Description

### [Technical Field]

The present invention relates to a sweetener composition, an agent for improving taste quality of a sweet substance and a method for improving taste quality, as well as an oral product with improved taste quality of a sweet substance and a production method thereof.

### [Background Art]

In recent years, health consciousness and diet consciousness have been growing, and there is a strong tendency to reduce sugar intake. Furthermore, in order to reduce sugar intake among diabetic patients, there is a growing demand for sweeteners, particularly high-intensity sweeteners, to replace sucrose when imparting sweetness to foods, beverages, pharmaceutical products, quasi-drugs, and the like.

At present, various natural sweeteners and high-intensity sweeteners are used to replace sucrose. Among them, high-intensity sweeteners have a sweetness several hundred to 10,000 times stronger than that of sucrose, and the addition of a small amount thereof can impart a strong sweetness. However, some of the high-intensity sweeteners and other sweeteners replacing sucrose have a distinctive bitter taste or astringent taste, or a lingering sweetness as an aftertaste, resulting in poor quality of sweetness and low palatability.

Particularly, steviol glycoside is widely used as a sweetener. However, when steviol glycoside is used, it is known that a bitter taste and lingering of sweetness are perceived.

Therefore, a technique to improve the taste quality of sweet substances, such as enhancing the sweetness, suppressing a bitter taste, suppressing lingering of the sweetness, and the like of a sweet substance has been demanded.

For example, use of a plant-derived component naringenin or hesperetin in combination with sweeteners is known. A method for enhancing the sweetness of a sweetener, characterized by a step of adding naringenin, has been reported (Patent Literatures 1 and 2). A mixture containing a rare sugar, hydroxyflavonoid, and a natural sweet compound has been reported (Patent Literature 3). A mixture containing phloretin, naringenin, and an additional sweet substance other than phloretin and naringenin has been reported (Patent Literature 4). A method for improving the flavor of foods, beverages, pharmaceutical products, or oral care products, including a step of adding specific concentrations of γ-aminobutyric acid and naringenin, has been reported (Patent Literature 5). An agent for enhancing the aroma intensity and/or aroma quality of a flavor composition, containing γ-aminobutyric acid and naringenin, has been reported (Patent Literature 6). A beverage containing stevia extract and naringenin has been reported (Patent Literatures 7 and 8). The use of a mixture containing hesperetin or a salt thereof to enhance the sweet taste of a sweet substance or the sweet olfactory impression of a flavoring which gives a sweet olfactory impression has been reported (Patent Literature 9). A flavor improving agent for foods and beverages, containing hesperetin and an emulsifier, has been reported (Patent Literature 10).

In addition, the use of γ-glutamyl peptide to improve the bitter taste of a sweet substance has been reported (Patent Literature 11).

### [Citation List]

### [Patent Literature]

[Patent Literature 1]
   JP 2015-188450 A
[Patent Literature 2]
   JP 2017-514503 A
[Patent Literature 3]
   JP 2022-524024 A
[Patent Literature 4]
   JP 2019-501648 A
[Patent Literature 5]
   WO 2013/008875
[Patent Literature 6]
   WO 2013/122226
[Patent Literature 7]
   US 2015/0320101 A1
[Patent Literature 8]
   US 2019/0200645 A1
[Patent Literature 9]
   JP 2009-502153 A
[Patent Literature 10]
   JP 2016-7147 A
[Patent Literature 11]
   JP 5195751 B

### [Summary of Invention]

### [Technical Problem]

The present invention aims to provide a sweetener composition capable of improving taste quality of a sweet substance, an agent for improving taste quality, and a method for improving taste quality.

### [Solution to Problem]

The present inventors have conducted intensive studies in an attempt to solve the aforementioned problems and found that the taste quality of a sweet substance can be improved by combining γ-glutamyl peptide and at least one compound selected from the group consisting of naringenin, hesperetin, and pinocembrin. Also, the present inventors have found that the taste quality of a sweet substance can be further improved by combining a lactone with γ-glutamyl peptide and at least one compound selected from the group consisting of naringenin, hesperetin, and pinocembrin. Also, the present inventors have found that the taste quality of a sweet substance can be improved by combining pinocembrin and the sweet substance, and completed the present invention.

That is, the present invention provides the following.

[1] A sweetener composition comprising the following components (A), (B), and (C) :
   (A) at least one γ-glutamyl peptide selected from the group consisting of a compound represented by the formula (I):

      γ-Glu-X-Gly (I)

      wherein X is an amino acid residue or an amino acid derivative residue, and
      a compound represented by the formula (II):

         γ-Glu-Y (II)
      wherein Y is an amino acid residue or an amino acid derivative residue,
      or a salt thereof,
   (B) at least one compound selected from the group consisting of naringenin, hesperetin, and pinocembrin, or a salt thereof, and
   (C) a sweet substance.
[2] The composition of [1], wherein the component (A) is at least one γ-glutamyl peptide selected from the group consisting of γ-Glu-Val-Gly and γ-Glu-Abu, or a salt thereof.
[2A] The composition of [1], wherein the component (A) is γ-Glu-Val-Gly or a salt thereof.
[3] The composition of [1], [2], or [2A], wherein the sweet substance is steviol glycoside.
[4] The composition of any one of [1] to [3] and [2A], wherein the component (B) is naringenin or a salt thereof.
[5] The composition of any one of [1] to [3] and [2A], wherein the component (B) is hesperetin or a salt thereof.
[6] The composition of any one of [1] to [3] and [2A], wherein the component (B) is pinocembrin or a salt thereof.
[7] The composition of any one of [1] to [6] and [2A], further comprising a lactone.
[8] An agent for improving taste quality of a sweet substance, comprising the following components (A) and (B):
   (A) at least one γ-glutamyl peptide selected from the group consisting of a compound represented by the formula (I):

      γ-Glu-X-Gly (I)

      wherein X is an amino acid residue or an amino acid derivative residue, and
      a compound represented by the formula (II):

         γ-Glu-Y (II)
      wherein Y is an amino acid residue or an amino acid derivative residue,
      or a salt thereof, and
   (B) at least one compound selected from the group consisting of naringenin, hesperetin, and pinocembrin, or a salt thereof.
[9] The agent of [8], wherein the component (A) is at least one γ-glutamyl peptide selected from the group consisting of γ-Glu-Val-Gly and γ-Glu-Abu, or a salt thereof.
[9A] The composition of [8], wherein the component (A) is γ-Glu-Val-Gly or a salt thereof.
[10] The agent of [8], [9], or [9A], wherein the sweet substance is steviol glycoside.
[11] The agent of any one of [8] to [10] and [9A], wherein the component (B) is naringenin or a salt thereof.
[12] The agent of any one of [8] to [10] and [9A], wherein the component (B) is hesperetin or a salt thereof.
[13] The agent of any one of [8] to [10] and [9A], wherein the component (B) is pinocembrin or a salt thereof.
[14] The agent of any one of [8] to [13] and [9A], further comprising a lactone.
[15] A method for improving taste quality of a sweet substance, comprising adding the following component (A) and (B) to an oral product containing the sweet substance:
   (A) at least one γ-glutamyl peptide selected from the group consisting of a compound represented by the formula (I):

      γ-Glu-X-Gly (I)

      wherein X is an amino acid residue or an amino acid derivative residue, and
      a compound represented by the formula (II):

         γ-Glu-Y (II)
      wherein Y is an amino acid residue or an amino acid derivative residue,
      or a salt thereof, and
   (B) at least one compound selected from the group consisting of naringenin, hesperetin, and pinocembrin, or a salt thereof.
[16] The method of [15], wherein the component (A) is at least one γ-glutamyl peptide selected from the group consisting of γ-Glu-Val-Gly and γ-Glu-Abu, or a salt thereof.
[16A] The method of [15], wherein the component (A) is γ-Glu-Val-Gly or a salt thereof.
[17] The method of [15], [16], or [16A], wherein the sweet substance is steviol glycoside.
[18] The method of any one of [15] to [17] and [16A], wherein the component (B) is naringenin or a salt thereof.
[19] The method of any one of [15] to [17] and [16A], wherein the component (B) is hesperetin or a salt thereof.
[20] The method of any one of [15] to [17] and [16A], wherein the component (B) is pinocembrin or a salt thereof.
[21] The method of any one of [15] to [20] and [16A], further comprising adding a lactone to the oral product.
[22] A method for producing an oral product with improved taste quality of a sweet substance, comprising adding the following component (A) and (B) to an oral product containing the sweet substance:
   (A) at least one γ-glutamyl peptide selected from the group consisting of a compound represented by the formula (I):

      γ-Glu-X-Gly (I)

      wherein X is an amino acid residue or an amino acid derivative residue, and
      a compound represented by the formula (II):

         γ-Glu-Y (II)
      wherein Y is an amino acid residue or an amino acid derivative residue,
      or a salt thereof, and
   (B) at least one compound selected from the group consisting of naringenin, hesperetin, and pinocembrin, or a salt thereof.
[23] The method of [22], wherein the component (A) is at least one γ-glutamyl peptide selected from the group consisting of γ-Glu-Val-Gly and γ-Glu-Abu, or a salt thereof.
[23A] The method of [22], wherein the component (A) is γ-Glu-Val-Gly or a salt thereof.
[24] The method of [22], [23], or [23A], wherein the sweet substance is steviol glycoside.
[25] The method of any one of [22] to [24] and [23A], wherein the component (B) is naringenin or a salt thereof.
[26] The method of any one of [22] to [24] and [23A], wherein the component (B) is hesperetin or a salt thereof.
[27] The method of any one of [22] to [24] and [23A], wherein the component (B) is pinocembrin or a salt thereof.
[28] The method of any one of [22] to [27] and [23A], further comprising adding a lactone to the oral product.
[29] An oral product comprising the following components (A), (B), and (C):
   (A) at least one γ-glutamyl peptide selected from the group consisting of a compound represented by the formula (I):

      γ-Glu-X-Gly (I)

      wherein X is an amino acid residue or an amino acid derivative residue, and
      a compound represented by the formula (II):

         γ-Glu-Y (II)
      wherein Y is an amino acid residue or an amino acid derivative residue,
      or a salt thereof,
   (B) at least one compound selected from the group consisting of naringenin, hesperetin, and pinocembrin, or a salt thereof, and
   (C) a sweet substance.
[30] The oral product of [29], wherein the component (A) is at least one γ-glutamyl peptide selected from the group consisting of γ-Glu-Val-Gly and γ-Glu-Abu, or a salt thereof.
[30A] The oral product of [29], wherein the component (A) is γ-Glu-Val-Gly or a salt thereof.
[31] The oral product of [29], [30], or [30A], wherein the sweet substance is steviol glycoside.
[32] The oral product of any one of [29] to [31] and [30A], wherein the component (B) is naringenin or a salt thereof.
[33] The oral product of any one of [29] to [31] and [30A], wherein the component (B) is hesperetin or a salt thereof.
[34] The oral product of any one of [29] to [31] and [30A], wherein the component (B) is pinocembrin or a salt thereof.
[35] The oral product of any one of [29] to [34] and [30A], further comprising a lactone.
[36] A sweetener composition comprising the following components (B-3) and (C):
   (B-3) pinocembrin or a salt thereof, and
   (C) a sweet substance.
[37] The composition of [36], wherein the sweet substance is steviol glycoside.
[38] An agent for improving taste quality of a sweet substance, comprising pinocembrin or a salt thereof.
[39] The agent of [38], wherein the sweet substance is steviol glycoside.
[40] A method for improving taste quality of a sweet substance, comprising adding pinocembrin or a salt thereof to an oral product containing the sweet substance.
[41] The method of [40], wherein the sweet substance is steviol glycoside.
[42] A method for producing an oral product with improved taste quality of a sweet substance, comprising adding pinocembrin or a salt thereof to an oral product containing the sweet substance.
[43] The method of [42], wherein the sweet substance is steviol glycoside.
[44] An oral product comprising the following components (B-3) and (C):
   (B-3) pinocembrin or a salt thereof, and
   (C) a sweet substance.
[45] The oral product of [44], wherein the sweet substance is steviol glycoside.

### [Advantageous Effects of Invention]

According to the present invention, a sweetener composition with an improved taste quality of a sweet substance can be provided.

According to the present invention, moreover, an agent for improving the taste quality of a sweet substance and a method for improving taste quality can be provided.

Furthermore, according to the present invention, an oral product (food, pharmaceutical product, quasi-drug, etc.) with improved taste quality of a sweet substance can be provided.

### [Description of Embodiments]

The present invention relates to sweetener composition comprising
(A) at least one γ-glutamyl peptide selected from the group consisting of a compound represented by the formula (I):

   γ-Glu-X-Gly (I)

   wherein X is an amino acid residue or an amino acid derivative residue, and
   a compound represented by the formula (II):

      γ-Glu-Y (II)
   wherein Y is an amino acid residue or an amino acid derivative residue,
   or a salt thereof,
(B) at least one compound selected from the group consisting of naringenin, hesperetin, and pinocembrin, or a salt thereof, and
(C) a sweet substance
(sometimes referred to as "the composition of the present invention" in the present specification).

The present invention also relates to an agent for improving the taste quality of a sweet substance, comprising
(A) at least one γ-glutamyl peptide selected from the group consisting of a compound represented by the formula (I):

   γ-Glu-X-Gly (I)

   wherein X is an amino acid residue or an amino acid derivative residue, and
   a compound represented by the formula (II):

      γ-Glu-Y (II)
   wherein Y is an amino acid residue or an amino acid derivative residue,
   or a salt thereof, and
(B) at least one compound selected from the group consisting of naringenin, hesperetin, and pinocembrin, or a salt thereof (sometimes referred to as "the taste quality-improving agent of the present invention" in the present specification).

In the present invention, "taste quality improvement", "improvement of taste quality", and "improving the taste quality" of a sweet substance mean at least one selected from enhancing the sweetness, suppressing the bitter taste, and suppressing lingering of the sweetness of a sweet substance. When the sweet substance is steviol glycoside, "taste quality improvement", "improvement of taste quality", and "improving the taste quality" of the steviol glycoside means at least one selected from enhancing the sweetness, suppressing the bitter taste, and suppressing lingering of the sweetness of steviol glycoside.

The agent for improving taste quality of a sweet substance of the present invention has the actions of enhancing the sweetness, suppressing a bitter taste, and suppressing lingering of the sweetness of the sweet substance, and when used together with a sweet substance, can impart a desirable sweetness to oral products. When the sweet substance is a high-intensity sweetener such as steviol glycoside and the like, the use of the taste quality-improving agent of the present invention together with a high-intensity sweetener suppresses bitter taste and/or lingering of sweetness, and a refreshing sweetness similar to that of sucrose can be imparted to an oral product. The improvement in the taste quality of the sweet substance, i.e., the enhancement of the sweetness, the suppression of the bitter taste, and the suppression of lingering of the sweetness of the sweet substance, can be evaluated, for example, by sensory evaluation by a specialist panel (e.g., the sensory evaluation shown in the Examples described below, and the like).

### (A) γ-glutamyl peptide

As the γ-glutamyl peptide in the present invention, the above-mentioned γ-glutamyl tripeptide represented by the formula (I) and γ-glutamyl dipeptide represented by the formula (II) can be mentioned. In the above-mentioned formulas, "γ-" means that X or Y is bonded via the carboxyl group at the γ-position of glutamic acid. As the γ-glutamyl peptide, the above-mentioned one kind of γ-glutamyl peptide may be used, or two or more kinds of γ-glutamyl peptides may be used in combination.

X and Y in the formulas (I) and (II) are each an amino acid residue or an amino acid derivative residue. Examples of the amino acid include neutral amino acids such as glycine (Gly), alanine (Ala), valine (Val), leucine (Leu), isoleucine (Ile), serine (Ser), threonine (Thr), cysteine (Cys), methionine (Met), asparagine (Asn), glutamine (Gln), proline (Pro), hydroxyproline (Hyp), and the like, acidic amino acids such as aspartic acid (Asp), glutamic acid (Glu), and the like, basic amino acids such as lysine (Lys), arginine (Arg), histidine (His), and the like, aromatic amino acids such as phenylalanine (Phe), tyrosine (Tyr), tryptophan (Trp), and the like, and other amino acids such as ornithine (Orn), sarcosine (Sar), citrulline (Cit), norvaline (Nva), norleucine (Nle), α-aminobutyric acid (2-aminobutyric acid) (Abu), taurine (Tau), tert-leucine (t-Leu), cycloleucine (Cle), α-aminoisobutyric acid (2-methylalanine) (Aib), penicillamine (Pen), homoserine (Hse), and the like.

The amino acid derivatives refer to various derivatives of the above-mentioned amino acids. Examples of the amino acid derivative include unnatural amino acid, amino alcohol, and amino acids in which one or more of the functional groups such as terminal carbonyl group, terminal amino group, and the thiol group of cysteine are substituted with various substituents. Specific examples of the substituent include alkyl group, acyl group, hydroxyl group, amino group, alkylamino group, nitro group, sulfonyl group, and various protecting groups.

As the amino acid derivative, for example, Arg(NO₂) :N-γ-nitroarginine, Cys(SNO) :S-nitroso cysteine, Cys(S-Me) :S-methylcysteine, Cys(S-allyl) :S-allylcysteine, Val-NH₂:valine amide, Val-ol:valinol(2-amino-3-methyl-1-butanol), Met(O):methionine sulfoxide, Cys(S-Me) (O):S-methylcysteine sulfoxide, and the like can be mentioned.

As the γ-glutamyl peptide, for example, γ-Glu-Val-Gly (CAS Registry Number: 38837-70-6), γ-Glu-Nva-Gly, γ-Glu-Abu, and γ-Glu-Nva can be mentioned, among which γ-Glu-Val-Gly and γ-Glu-Abu are preferred, and γ-Glu-Val-Gly is more preferred.

In the present invention, the amino acid and amino acid derivative constituting the γ-glutamyl peptide are in an L-form unless particularly noted.

In the present invention, the salt of γ-glutamyl peptide is not particularly limited as long as it can be ingested orally. For example, as the salts for acidic groups such as carboxyl group and the like, ammonium salt, salts with alkali metals such as sodium, potassium and the like, salts with alkaline earth metals such as calcium, magnesium, and the like, aluminum salt, zinc salt, salts with organic amines such as triethylamine, ethanolamine, morpholine, pyrrolidine, piperidine, piperazine, dicyclohexylamine and the like, salt with basic amino acid such as arginine, lysine and the like can be mentioned. Examples of the salt for basic group such as amino group and the like include salts with inorganic acids such as hydrochloric acid, sulfuric acid, phosphoric acid, nitric acid, hydrobromic acid and the like, salts with organic carboxylic acid such as acetic acid, citric acid, benzoic acid, maleic acid, fumaric acid, tartaric acid, succinic acid, tannic acid, butyric acid, hibenzic acid, pamoic acid, enanthic acid, decanoic acid, teoclic acid, salicylic acid, lactic acid, oxalic acid, mandelic acid, malic acid, methylmalonic acid and the like, salts with organic sulfonic acid such as methanesulfonic acid, benzenesulfonic acid, p-toluenesulfonic acid, and the like can be mentioned. Only one kind of salt may be used, or two or more kinds of salts may be used in combination.

As γ-glutamyl peptide and a salt thereof, commercially available products may be used, or those obtained by appropriate production may also be used.

The production method of peptide is not particularly limited and, for example, known methods can be utilized. Examples of the known method include (1) a method for chemically synthesizing peptide and (2) a method for synthesizing peptide by an enzymatic reaction. When synthesizing a comparatively short peptide with 2 or 3 amino acid residues, a method for chemical synthesis is particularly convenient.

When chemically synthesizing peptides, the peptides can be synthesized or semisynthesized using a peptide synthesizer. As a method for chemically synthesizing peptides, solid-phase peptide synthesis can be mentioned. The synthesized peptide can be purified by conventional means, such as ion exchange chromatography, reversed-phase high performance liquid chromatography, and affinity chromatography. Such solid-phase peptide synthesis methods and subsequent peptide purification are well known in the technique field.

When synthesizing peptides by an enzymatic reaction, for example, the method described in WO2004/011653 can be used. Specifically, for example, dipeptide or tripeptide can be synthesized by reacting an amino acid or dipeptide whose carboxyl group has been esterified or amidated with an amino acid whose amino group is free (for example, an amino acid whose carboxyl group is protected) in the presence of a peptidyl transferase. The synthesized dipeptide or tripeptide can be appropriately purified. Examples of the peptidyl transferase include cultures of microorganisms that have the ability to generate peptides, culture supernatants isolated from the cultures, bacterial cells isolated from the cultures, processed bacterial cells of the microorganisms, and peptidyl transferases isolated therefrom. As the peptidyl transferases, those purified as appropriate can be used where necessary.

The γ-glutamyl peptide can be produced, for example, by culturing a microorganism capable of producing the γ-glutamyl peptide and recovering the γ-glutamyl peptide from the culture medium or bacterial cells. Specifically, for example, yeast containing a high concentration of γ-glutamyl peptide such as γ-Glu-Abu can be obtained by the method described in JP 2012-213376 A or WO 2012/046731. In addition, γ-glutamyl peptide can be produced, for example, by recovering from agricultural/aquatic/livestock products containing the γ-glutamyl peptide.

The γ-glutamyl peptide may or may not be a purified product. That is, as the γ-glutamyl peptide, a material containing the peptide at a high content may also be used. "Containing γ-glutamyl peptide at a high content" means that the content of γ-glutamyl peptide is 100 ppm by weight or more. That is, "blending (adding) γ-glutamyl peptide" is not limited to blending the peptide itself, but also includes blending a material containing a high content of the peptide. Examples of the material containing a high content of γ-glutamyl peptide include fermentation products such as culture solution, bacterial cells, and culture supernatant obtained by culturing microorganisms capable of producing the peptide, and processed products thereof. The processed products include those obtained by subjecting the above-mentioned fermentation products to treatments such as concentration, dilution, drying, fractionation, extraction, and purification. Examples of such processed products include yeast extracts containing γ-glutamyl peptides such as γ-Glu-Abu (JP 2012-213376 A, WO 2012/046731). In addition to yeast extract, there may be foods and beverages (including ingredients and seasonings) that naturally contain γ-glutamyl peptide. Such foods and beverages (including ingredients and seasonings) other than yeast extract may be excluded from the "material containing γ-glutamyl peptide at a high content" in the present invention. The γ-glutamyl peptide may be purified to any desired degree. For example, the γ-glutamyl peptide may have a purity of 50% by weight or more, 70% by weight or more, 90% by weight or more, or 95% by weight or more.

The γ-Glu-Abu (also to be referred to as γ-glutamyl -2-aminobutyric acid) to be used in the present invention may exist in the form of an adduct with water or various solvents. In the present invention, these adducts are also referred to as γ-Glu-Abu. In addition, the 2-aminobutyric acid constituting γ-Glu-Abu in the present invention is in an L form.

The γ-Glu-Abu to be used in the present invention may be synthesized by a method known per se, but a commercially available product can also be used preferably. Among these, a product manufactured for food use is particularly preferred. Known methods include, for example, a method for synthesizing peptide chemically using a peptide synthesizer, a method for synthesizing peptide by an enzymatic reaction such as the method described in WO 2004/011653, and a method for producing peptide by culturing microorganisms such as the method described in JP 2012-213376 A or WO 2012/046731.

The γ-Glu-Abu is not particularly limited as long as it contains γ-Glu-Abu and also includes, for example, a composition containing γ-Glu-Abu. Examples of such composition include fermentation products such as culture solution, bacterial cells, and culture supernatant obtained by culturing a microorganism capable of producing γ-Glu-Abu, and yeast extract containing γ-Glu-Abu (hereinafter also to be referred to as "γ-Glu-Abu-containing yeast extract") (JP 2012-213376 A, WO 2012/046731, and the like).

The "yeast extract" refers to an extract of yeast, and the form of the yeast extract is not particularly limited. The yeast extract may be in any form, such as liquid, powder, paste, and the like. The kind of yeast containing γ-Glu-Abu (hereinafter also to be referred to as "y-Glu-Abu-containing yeast") is not particularly limited, and examples of the γ-Glu-Abu-containing yeast include yeasts of the genus Saccharomyces such as Saccharomyces cerevisiae and the like, yeasts of the genus Schizosaccharomyces such as Schizosaccharomyces pombe and the like, and yeasts of the genus Candida such as Candida utilis and the like. Among these, yeasts of the genus Saccharomyces and yeasts of the genus Candida are preferred.

The content of γ-Glu-Abu in the γ-Glu-Abu-containing yeast extract is, for example, 1% by weight or more, 3% by weight or more, 5% by weight or more, 7% by weight or more, 10% by weight or more, 15% by weight or more, 20% by weight or more, 25% by weight or more, or 30% by weight or more, with respect to the dry weight of the γ-Glu-Abu-containing yeast extract, or 50% by weight or less, 45% by weight or less, 40% by weight or less, 30% by weight or less, 20% by weight or less, 15% by weight or less, 13% by weight or less, or 10% by weight or less, or a combination thereof. More specifically, the content of γ-Glu-Abu in the γ-Glu-Abu-containing yeast extract is, for example, 1 to 30% by weight, 3 to 20% by weight, 5 to 15% by weight, or 7 to 13% by weight, with respect to the dry weight of the γ-Glu-Abu-containing yeast extract. Only one kind of γ-Glu-Abu-containing yeast extract may be used, or two or more kinds thereof may be used in combination.

As the γ-Glu-Abu-containing yeast extract, commercially available products may be used, or those obtained by appropriate production may also be used. The production method of the γ-Glu-Abu-containing yeast extract is not particularly limited and the γ-Glu-Abu-containing yeast extract can be produced, for example, by a known method. More specifically, the γ-Glu-Abu-containing yeast extract can be produced, for example, by processing a γ-Glu-Abu-containing yeast into yeast extract. Processing of the γ-Glu-Abu-containing yeast into yeast extract can be performed, for example, by self-digestion method, acid hydrolysis method, enzymatic hydrolysis method, or a combination thereof.

The concentration and content ratio of γ-glutamyl peptide in the composition of the present invention can be appropriately set according to various conditions such as the kind of γ-glutamyl peptide, the concentration of γ-glutamyl peptide at the time of eating, and the amount of use of the composition of the present invention.

The amount (concentration) of component (A) γ-glutamyl peptide in the composition of the present invention to be added to an oral product is such that the concentration at the time of eating is within a range desired from the aspect of improving the taste quality of sweet substances. For example, it is used such that its concentration at the time of eating is generally 0.01 ppm by weight or more, preferably 0.03 ppm by weight or more, more preferably 0.05 ppm by weight or more, further preferably 0.1 ppm by weight or more, further more preferably 0.3 ppm by weight or more, and the upper limit is generally 200 ppm by weight or less, preferably 100 ppm by weight or less, more preferably 50 ppm by weight or less, further preferably 10 ppm by weight or less, further more preferably 5 ppm by weight or less, with respect to the total weight of the oral product, when converted to the weight of a free form of the component (A) γ-glutamyl peptide.

Specifically, the concentration is generally 0.01 to 200 ppm by weight, preferably 0.01 to 50 ppm by weight, more preferably 0.05 to 10 ppm by weight, further preferably 0.1 to 5 ppm by weight, further more preferably 0.3 to 5 ppm by weight.

When the taste quality-improving agent of the present invention is used to improve the taste quality of sweet substances, the amount (concentration) of component (A) to be added to an oral product is the same as above.

In the present specification, the concentration at the time of eating means the concentration of component (A) γ-glutamyl peptide at the time of intake of an oral product (oral administration, oral use), and shows the concentration at the time of eating after cooking. The concentration at the time of intake of quasi-drugs such as toothpaste and mouthwash refers to the concentration at the time of use, that is, the concentration at the time of placing same in the mouth. For example, when the oral product is a concentrated beverage, it means the concentration of γ-glutamyl peptide in the beverage when it is drunk after dilution, and when the oral product is a powdered beverage, it means the concentration of γ-glutamyl peptide in the beverage when it is drunk after dissolution in drinking water or the like.

### (B) naringenin, hesperetin, and pinocembrin

The composition and taste quality-improving agent of the present invention contains at least one compound selected from the group consisting of naringenin, hesperetin, and pinocembrin, or a salt thereof. Naringenin, hesperetin, and pinocembrin are compounds having the following structures, respectively, and are classified as flavonoids.

naringenin (CAS Registry Number: 480-41-1, 67604-48-2, 93602-28-9, 17654-19-2) 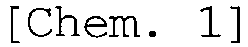 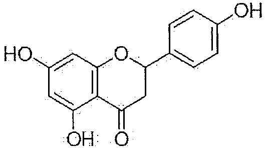
hesperetin (CAS Registry Number: 520-33-2, 69097-99-0, 24604-97-5) 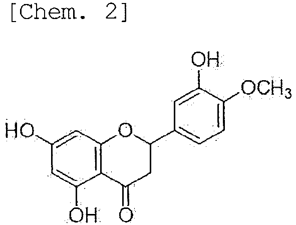
pinocembrin (CAS Registry Number: 480-39-7, 68745-38-0, 206660-42-6)

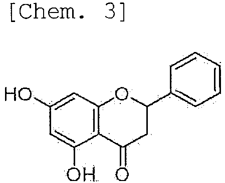

In the present invention, naringenin, hesperetin, and pinocembrin can be used in the form of a salt thereof. The above-mentioned salt is not particularly limited as long as it is an edible salt that does not impair the purpose of the present invention. Examples include salts with alkali metals such as sodium, potassium, and the like; salts with alkaline earth metals such as calcium, magnesium, and the like; ammonium salts; aluminum salts; zinc salts; salts with organic amines such as triethylamine, ethanolamine, morpholine, pyrrolidine, piperidine, piperazine, dicyclohexylamine, and the like; and salts with basic amino acids such as arginine, lysine, and the like. One kind of these salts may be used alone, or two or more kinds thereof may be used in combination.

Naringenin, hesperetin, and pinocembrin exist as stereoisomers (S form or R form) or stereoisomer mixtures, and all of these are encompassed by the naringenin, hesperetin, and pinocembrin in the present invention. Naringenin, hesperetin, and pinocembrin may also be in the form of hydrates (hydrated salts). Examples of such hydrates include monohydrates to hexahydrates, and these hydrates are also encompassed by the naringenin, hesperetin, and pinocembrin in the present invention.

At least one compound selected from the group consisting of naringenin, hesperetin, and pinocembrin, or a salt thereof, may be a synthetic product, an isolated and purified form, or a plant extract, as long as it is suitable for oral ingestion. Commercially available products can also be used.

The composition and taste quality-improving agent of the present invention may contain one kind of a compound selected from the group consisting of naringenin, hesperetin, and pinocembrin or a salt thereof alone or a combination of two or more kinds thereof.

The amount (concentration) of component (B) in the composition of the present invention to be added to an oral product is such that the concentration at the time of eating is within a range desired from the aspect of improving the taste quality of sweet substances. For example, it is used such that its concentration at the time of eating is generally 0.001 ppm by weight or more, preferably 0.01 ppm by weight or more, more preferably 0.05 ppm by weight or more, further preferably 0.07 ppm by weight or more, further more preferably 0.1 ppm by weight or more, and the upper limit is generally 5,000 ppm by weight or less, preferably 1,000 ppm by weight or less, more preferably 500 ppm by weight or less, further preferably 100 ppm by weight or less, further more preferably 50 ppm by weight or less, with respect to the total weight of the oral product, when converted to the weight of a free form.

Specifically, the concentration is generally 0.001 to 5,000 ppm by weight, preferably 0.01 to 1,000 ppm by weight, more preferably 0.05 to 500 ppm by weight, further preferably 0.07 to 100 ppm by weight, further morepreferably 0.1 to 50 ppm by weight.

The amount (concentration) of component (B) to be added to an oral product when the taste quality-improving agent of the present invention is used for improving the taste quality of sweet substances is the same as above.

In the present specification, the concentration at the time of eating means the concentration of component (B) at the time of intake of an oral product (oral administration, oral use), and shows the concentration at the time of eating after cooking. The concentration at the time of taking quasi-drugs such as toothpaste and mouthwash refers to the concentration at the time of use, that is, the concentration at the time of placing same in the mouth. For example, when the oral product is a concentrated beverage, it means the concentration of component (B) in the beverage when it is drunk after dilution, and when the oral product is a powdered beverage, it means the concentration of component (B) in the beverage when it is drunk after dissolution in drinking water or the like.

### (C) sweet substance

Sweet substance includes saccharides such as sucrose, fructose, glucose, galactose, lactose, maltose, trehalose, xylose, arabinose, isomerized sugar, oligosaccharide, and the like; sugar alcohols such as erythritol, xylitol, mannitol, sorbitol, maltitol, lactitol, inositol, and the like; and high-intensity sweeteners such as sweet proteins (e.g., brazzein, thaumatin, monellin, etc.) and the like. High-intensity sweetener may be either a natural sweetener or a synthetic sweetener, and examples include steviol glycoside, aspartame, sucralose, acesulfame potassium, neotame, advantame, saccharin, saccharin sodium, glycyrrhizin, monatin, brazzein, thaumatin, monellin, mogroside V, monk fruit extract, licorice extract, and the like. As the sweet substance, a high-intensity sweetener is preferred, and steviol glycoside is more preferred.

Steviol glycoside is glycoside in which a sugar is bound to steviol. Examples of steviol glycoside include, but are not limited to, rebaudioside A, rebaudioside D, rebaudioside M, rebaudioside E, stevioside, rebaudioside C, rebaudioside B, rebaudioside F, dulcoside A, rubusoside, and steviolbioside. The steviol glycoside preferably includes at least one selected from the group consisting of rebaudioside A, rebaudioside D, rebaudioside M, rebaudioside E, stevioside, rebaudioside C, rebaudioside B, rebaudioside F, dulcoside A, rubusoside, and steviolbioside, more preferably at least one selected from the group consisting of rebaudioside A, rebaudioside D, rebaudioside M, rebaudioside E, stevioside, rebaudioside C, rebaudioside B, rebaudioside F, dulcoside A, rubusoside, and steviolbioside, further preferably at least one selected from the group consisting of rebaudioside A, rebaudioside D, rebaudioside M, and rebaudioside E.

Steviol glycoside may be extracted from the Asteraceae plant Stevia (Stevia rebaudiana) (stevia extract), one purified from stevia extract, or steviol glycoside obtained by an enzymatic treatment or a chemical treatment of stevia extract or a compound purified from stevia extract. Commercially available steviol glycoside may also be used.

The composition of the present invention may contain one kind of a single sweet substance alone, or two or more kinds thereof in combination. When the sweet substance is steviol glycoside, the composition of the present invention may contain one kind of steviol glycoside alone, or two or more kinds thereof in combination.

The amount (concentration) of component (C) sweet substance in the composition of the present invention to be added to an oral product is such that the concentration at the time of eating is within a range desired from the aspect of improving the taste quality of sweet substances. For example, the component (C) sweet substance is used such that its concentration at the time of eating is generally 0.01 ppm by weight or more, preferably 0.05 ppm by weight or more, more preferably 0.1 ppm by weight or more, further preferably 1 ppm by weight or more, further more preferably 10 ppm by weight or more, and the upper limit is generally 500,000 ppm by weight or less, preferably 50,000 ppm by weight or less, more preferably 5,000 ppm by weight or less, further preferably 2,000 ppm by weight, further more preferably 1,000 ppm by weight, with respect to the total weight of the oral product.

Specifically, the concentration is generally 0.01 to 500,000 ppm by weight, preferably 0.05 to 50,000 ppm by weight, more preferably 0.1 to 5,000 ppm by weight, further preferably 1 to 2,000 ppm by weight, further more preferably 10 to 1,000 ppm by weight.

The amount (concentration) of the sweet substance in an oral product when the taste quality-improving agent of the present invention is used for improving the taste quality of sweet substances is the same as above.

In the present specification, the concentration at the time of eating means the concentration of component (C) at the time of intake of an oral product (oral administration, oral use), and shows the concentration at the time of eating after cooking. The concentration at the time of intake of quasi-drugs such as toothpaste and mouthwash refers to the concentration at the time of use, that is, the concentration at the time of placing same in the mouth. For example, when the oral product is a concentrated beverage, it means the concentration of component (C) in the beverage when it is drunk after dilution, and when the oral product is a powdered beverage, it means the concentration of component (C) in the beverage when it is drunk after dissolution in drinking water or the like.

### (D) lactone

The composition and taste quality-improving agent of the present invention may further contain a lactone (hereinafter also to be referred to as component (D)).

In the present invention, a lactone refers to a lactone (cyclic ester) having 6 to 14 carbon atoms. As lactone, γ-lactone (5-membered ring lactone) and δ-lactone (6-membered ring lactone) are preferred, and γ-hexalactone, γ-heptalactone, γ-octalactone, γ-nonalactone, γ-decalactone, γ-undecalactone, γ-dodecalactone, γ-tridecalactone, γ-tetradecalactone, δ-hexalactone, δ-heptalactone, δ-octalactone, δ-nonalactone, δ-decalactone, δ-undecalactone, δ-dodecalactone, δ-tridecalactone, δ-tetradecalactone, and the like can be mentioned. Among these, a lactone having 8 to 12 carbon atoms are preferred, at least one selected from the group consisting of γ-octalactone, γ-nonalactone, γ-decalactone, γ-undecalactone, γ-dodecalactone, δ-octalactone, δ-nonalactone, δ-decalactone, δ-undecalactone, and δ-dodecalactone is more preferred, and γ-nonalactone is further preferred. These lactones exist as stereoisomers (S form or R form) or stereoisomer mixtures, and all of these are encompassed by the lactone in the present invention.

γ-Nonalactone (CAS Registry Number: 104-61-0) is a compound having the following structure.

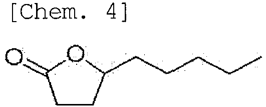

γ-Nonalactone exists as a stereoisomer (S form or R form) or a stereoisomer mixture, and all of these are encompassed by the γ-nonalactone in the present invention.

Lactones may be synthetic products, isolated and purified forms, or plant extracts, as long as they are suitable for oral ingestion. Commercially available products can also be used.

The composition and taste quality-improving agent of the present invention may contain one kind of lactone alone or a combination of two or more kinds thereof.

The amount (concentration) of component (D) in the composition of the present invention to be added to an oral product is such that the concentration of component (D) at the time of eating is within a range desired from the aspect of improving the taste quality of sweet substances. For example, it is used such that its concentration at the time of eating is generally 0.3 ppb by weight or more, preferably 0.5 ppb by weight or more, more preferably 1 ppb by weight or more, further preferably 3 ppb by weight or more, further more preferably 5 ppb by weight or more, and the upper limit is generally 200 ppb by weight or less, preferably 150 ppb by weight or less, more preferably 100 ppb by weight or less, further preferably 50 ppb by weight or less, further more preferably 20 ppb by weight or less, with respect to the total weight of the oral product.

Specifically, the concentration is generally 0.3 to 200 ppb by weight, preferably 0.5 to 150 ppb by weight, more preferably 1 to 100 ppb by weight, further preferably 3 to 50 ppb by weight, further more preferably 5 to 20 ppb by weight.

The amount (concentration) of component (D) in an oral product when the taste quality-improving agent of the present invention is used for improving the taste quality of sweet substances is the same as above.

In the present specification, the concentration at the time of eating means the concentration of component (D) at the time of intake of an oral product (oral administration, oral use), and shows the concentration at the time of eating after cooking. The concentration at the time of taking quasi-drugs such as toothpaste and mouthwash refers to the concentration at the time of use, that is, the concentration at the time of placing same in the mouth. For example, when the oral product is a concentrated beverage, it means the concentration of component (D) in the beverage when it is drunk after dilution, and when the oral product is a powdered beverage, it means the concentration of component (D) in the beverage when it is drunk after dissolution in drinking water or the like.

The total amount of components (A), (B), and (C) contained in the composition of the present invention is, for example, generally 0.001% by weight or more, preferably 0.1% by weight or more, more preferably 1% by weight or more, with respect to the total weight of the composition of the present invention. The amount is generally 100% by weight or less, preferably 99.9% by weight or less, more preferably 99% by weight or less, further preferably 95% by weight or less, further more preferably 90% by weight or less, with respect to the composition of the present invention.

Specifically, the amount is generally 0.001 to 100% by weight, preferably 0.1 to 100% by weight, more preferably 1 to 100% by weight, further preferably 1 to 99.9% by weight, further more preferably 1 to 99% by weight.

When the composition of the present invention further contains component (D), the total amount of components (A), (B), (C), and (D) contained in the composition of the present invention is, for example, generally 0.001% by weight or more, preferably 0.1% by weight or more, more preferably 1% by weight or more, with respect to the total weight of the composition of the present invention. The amount is generally 100% by weight or less, preferably 99.9% by weight or less, more preferably 99% by weight or less, further preferably 95% by weight or less, further more preferably 90% by weight or less, with respect to the composition of the present invention.

Specifically, the amount is generally 0.001 to 100% by weight, preferably 0.1 to 100% by weight, more preferably 1 to 100% by weight, further preferably 1 to 99.9% by weight, further more preferably 1 to 99% by weight.

The concentration and content ratio of component (A) in the composition of the present invention can be appropriately set according to various conditions such as the kind of γ-glutamyl peptide and the kind of component (B) and component (C), and the kind of a food for which the composition of the present invention is used.

The weight ratio of components (A), (B), and (C) ((A): (B): (C)) in the composition of the present invention is generally 1 : 0.01-1,000 : 0.001-3,000,000, preferably 1 : 0.1-500 : 0.01-300,000, more preferably 1 : 1-100 : 0.1-30,000, further preferably 1 : 1-50 : 1-10,000, further more preferably 1 : 1-30 : 1-2,000, when converted to the weight of a free form, from the aspect of improving the taste quality of sweet substances.

When the composition of the present invention further contains component (D), the weight ratio of components (A), (B), (C), and (D) ((A):(B):(C):(D)) in the composition of the present invention is generally 1 : 0.01-1,000 : 0.001-3,000,000 : 0.0001-1, preferably 1 : 0.1-500 : 0.01-300,000 : 0.0005-0.5, more preferably 1 : 1-100 : 0.1-30,000 : 0.001-0.3, further preferably 1 : 1-50 : 1-10,000 : 0.005-0.2, further more preferably 1 : 1-30 : 1-2,000 : 0.01-0.1, when converted to the weight of a free form, from the aspect of improving the taste quality of sweet substances.

The total amount of components (A) and (B) contained in the taste quality-improving agent of the present invention is generally 0.001% by weight or more, preferably 0.1% by weight or more, more preferably 1% by weight or more, with respect to the total weight of the taste quality-improving agent of the present invention. The amount is generally 100% by weight or less, preferably 99.9% by weight or less, more preferably 99% by weight or less, further preferably 95% by weight or less, further more preferably 90% by weight or less, with respect to the composition of the present invention.

Specifically, the amount is generally 0.001 to 100% by weight, preferably 0.1 to 100% by weight, more preferably 1 to 100% by weight, further preferably 1 to 99.9% by weight, further more preferably 1 to 99% by weight.

When the taste quality-improving agent of the present invention further contains component (D), the total amount of components (A), (B), and (D) contained in the taste quality-improving agent of the present invention is, for example, generally 0.001% by weight or more, preferably 0.1% by weight or more, more preferably 1% by weight or more, with respect to the total weight of the taste quality-improving agent of the present invention. The amount is generally 100% by weight or less, preferably 99.9% by weight or less, more preferably 99% by weight or less, further preferably 95% by weight or less, further more preferably 90% by weight or less, with respect to the composition of the present invention.

Specifically, the amount is generally 0.001 to 100% by weight, preferably 0.1 to 100% by weight, more preferably 1 to 100% by weight, further preferably 1 to 99.9% by weight, further more preferably 1 to 99% by weight.

The concentration and content ratio of component (A) in the taste quality-improving agent of the present invention can be appropriately set according to various conditions such as the kind of γ-glutamyl peptide and the kind of component (B), and the kind of a food for which the taste quality-improving agent of the present invention is used.

The weight ratio of components (A) and (B) ((A):(B)) in the taste quality-improving agent of the present invention is generally 1 : 0.01-1,000, preferably 1 : 0.1-500, more preferably 1 : 1-100, further preferably 1 : 1-50, further more preferably 1 : 1-30, when converted to the weight of a free form, from the aspect of improving the taste quality of sweet substances.

When the taste quality-improving agent of the present invention further contains component (D), the weight ratio of components (A), (B), and (D) ((A):(B):(D)) in the taste quality-improving agent of the present invention is generally 1 : 0.01-1,000 : 0.0001-1, preferably 1 : 0.1-500 : 0.0005-0.5, more preferably 1 : 1-100 : 0.001-0.3, further preferably 1 : 1-50 : 0.005-0.2, further more preferably 1 : 1-30 : 0.01-0.1, when converted to the weight of a free form, from the aspect of improving the taste quality of sweet substances.

The composition of the present invention can be produced using only components (A), (B), and (C) or by adding "other components", and according to a method conventionally used in the field of food production and the like.

The "other components" are not particularly limited as long as they do not impair the effects of the present invention. For example, amino acids such as γ-aminobutyric acid, serine, alanine, glutamic acid, glycine and the like, and salts thereof; organic acids such as acetic acid, tartaric acid, and the like and salts thereof; inorganic salts such as edible salt, sodium chloride, potassium chloride, and the like; dietary fibers such as indigestible dextrin and the like; nucleic acids such as inosinic acid, guanylic acid, xanthylic acid, and the like and salts thereof; pH buffering agent, pH adjuster, excipient, filler, flavor, edible oil, antioxidant, thickening stabilizer, emulsifier, edible salt, organic salts, inorganic salts, seasoning (e.g., umami seasonings such as sodium glutamate, etc.), acidulant, colorant, food color former, ethanol, and water can be mentioned.

As "other component", one kind of component may be used, or two or more kinds of components may be used in combination.

The composition of the present invention can contain other components in a proportion of 0 to 99.999% by weight, preferably 1 to 99.9% by weight, more preferably 10 to 99% by weight, of the composition as long as the effect of the present invention can be afforded.

The form of the composition of the present invention is not particularly limited. It is a form that is easy to add to foods and beverages, and powder, granules, liquid, syrup, gel, paste, cube, and the like can be mentioned. Formulation can be performed by a conventional method.

The composition of the present invention can be produced by a method known per se or a method analogous thereto.

The composition of the present invention can be used to improve the taste quality of sweet substances. In particular, the composition of the present invention is used to enhance the sweetness, suppress a bitter taste, reduce lingering sweetness of steviol glycoside, and the like. In addition, the taste quality-improving agent of the present invention is used to improve the taste quality of an oral product (e.g., food, oral medicament, etc.) containing a sweet substance.

In a preferred embodiment of the composition of the present invention, the amount of the composition added to an oral product, when converted to the weight of a free form, with respect to the total weight of the oral product, is within the following range:
γ-glutamyl peptide or a salt thereof 0.01 to 200 ppm by weight, at least one compound selected from the group consisting of naringenin, hesperetin, and pinocembrin, or a salt thereof 0.001 to 5,000 ppm by weight, and
sweet substance 0.01 to 500,000 ppm by weight;
preferably,
γ-glutamyl peptide or a salt thereof 0.01 to 50 ppm by weight, at least one compound selected from the group consisting of naringenin, hesperetin, and pinocembrin, or a salt thereof 0.01 to 1,000 ppm by weight, and
sweet substance 0.05 to 50,000 ppm by weight;
more preferably,
γ-glutamyl peptide or a salt thereof 0.05 to 10 ppm by weight, at least one compound selected from the group consisting of naringenin, hesperetin, and pinocembrin, or a salt thereof 0.05 to 500 ppm by weight, and
sweet substance 0.1 to 5,000 ppm by weight;
further preferably,
γ-glutamyl peptide or a salt thereof 0.1 to 5 ppm by weight,
at least one compound selected from the group consisting of naringenin, hesperetin, and pinocembrin, or a salt thereof 0.07 to 100 ppm by weight, and
sweet substance 1 to 2,000 ppm by weight;
further more preferably,
γ-glutamyl peptide or a salt thereof 0.3 to 5 ppm by weight,
at least one compound selected from the group consisting of naringenin, hesperetin, and pinocembrin, or a salt thereof 0.1 to 50 ppm by weight, and
sweet substance 10 to 1,000 ppm by weight.
γ-glutamyl peptide or a salt thereof 0.01 to 200 ppm by weight, at least one compound selected from the group consisting of naringenin, hesperetin, and pinocembrin, or a salt thereof 0.001 to 5,000 ppm by weight, and
steviol glycoside 0.01 to 500,000 ppm by weight;
preferably,
γ-glutamyl peptide or a salt thereof 0.01 to 50 ppm by weight, at least one compound selected from the group consisting of naringenin, hesperetin, and pinocembrin, or a salt thereof 0.01 to 1,000 ppm by weight, and
steviol glycoside 0.05 to 50,000 ppm by weight;
more preferably,
γ-glutamyl peptide or a salt thereof 0.05 to 10 ppm by weight, at least one compound selected from the group consisting of naringenin, hesperetin, and pinocembrin, or a salt thereof 0.05 to 500 ppm by weight, and
steviol glycoside 0.1 to 5,000 ppm by weight;
further preferably,
γ-glutamyl peptide or a salt thereof 0.1 to 5 ppm by weight,
at least one compound selected from the group consisting of naringenin, hesperetin, and pinocembrin, or a salt thereof 0.07 to 100 ppm by weight, and
steviol glycoside 1 to 2,000 ppm by weight;
further more preferably,
γ-glutamyl peptide or a salt thereof 0.3 to 5 ppm by weight, at least one compound selected from the group consisting of naringenin, hesperetin, and pinocembrin, or a salt thereof 0.1 to 50 ppm by weight, and
steviol glycoside 10 to 1,000 ppm by weight.
γ-glutamyl peptide or a salt thereof 0.01 to 200 ppm by weight, naringenin or a salt thereof 0.001 to 5,000 ppm by weight, and sweet substance 0.01 to 500,000 ppm by weight;
preferably,
γ-glutamyl peptide or a salt thereof 0.01 to 50 ppm by weight, naringenin or a salt thereof 0.01 to 1,000 ppm by weight, and sweet substance 0.05 to 50,000 ppm by weight;
more preferably,
γ-glutamyl peptide or a salt thereof 0.05 to 10 ppm by weight, naringenin or a salt thereof 0.05 to 500 ppm by weight, and sweet substance 0.1 to 5,000 ppm by weight;
further preferably,
γ-glutamyl peptide or a salt thereof 0.1 to 5 ppm by weight, naringenin or a salt thereof 0.07 to 100 ppm by weight, and sweet substance 1 to 2,000 ppm by weight;
further more preferably,
γ-glutamyl peptide or a salt thereof 0.3 to 5 ppm by weight, naringenin or a salt thereof 0.1 to 50 ppm by weight, and sweet substance 10 to 1,000 ppm by weight.
γ-glutamyl peptide or a salt thereof 0.01 to 200 ppm by weight, naringenin or a salt thereof 0.001 to 5,000 ppm by weight, and steviol glycoside 0.01 to 500,000 ppm by weight;
preferably,
γ-glutamyl peptide or a salt thereof 0.01 to 50 ppm by weight, naringenin or a salt thereof 0.01 to 1,000 ppm by weight, and steviol glycoside 0.05 to 50,000 ppm by weight;
more preferably,
γ-glutamyl peptide or a salt thereof 0.05 to 10 ppm by weight,
naringenin or a salt thereof 0.05 to 500 ppm by weight, and steviol glycoside 0.1 to 5,000 ppm by weight;
further preferably,
γ-glutamyl peptide or a salt thereof 0.1 to 5 ppm by weight, naringenin or a salt thereof 0.07 to 100 ppm by weight, and steviol glycoside 1 to 2,000 ppm by weight;
further more preferably,
γ-glutamyl peptide or a salt thereof 0.3 to 5 ppm by weight, naringenin or a salt thereof 0.1 to 50 ppm by weight, and steviol glycoside 10 to 1,000 ppm by weight.
γ-glutamyl peptide or a salt thereof 0.01 to 200 ppm by weight, hesperetin or a salt thereof 0.001 to 5,000 ppm by weight, and steviol glycoside 0.01 to 500,000 ppm by weight;
preferably,
γ-glutamyl peptide or a salt thereof 0.01 to 50 ppm by weight, hesperetin or a salt thereof 0.01 to 1,000 ppm by weight, and steviol glycoside 0.05 to 50,000 ppm by weight;
more preferably,
γ-glutamyl peptide or a salt thereof 0.05 to 10 ppm by weight, hesperetin or a salt thereof 0.05 to 500 ppm by weight, and steviol glycoside 0.1 to 5,000 ppm by weight;
further preferably,
γ-glutamyl peptide or a salt thereof 0.1 to 5 ppm by weight, hesperetin or a salt thereof 0.07 to 100 ppm by weight, and steviol glycoside 1 to 2,000 ppm by weight;
further more preferably,
γ-glutamyl peptide or a salt thereof 0.3 to 5 ppm by weight, hesperetin or a salt thereof 0.1 to 50 ppm by weight, and steviol glycoside 10 to 1,000 ppm by weight.
γ-glutamyl peptide or a salt thereof 0.01 to 200 ppm by weight, pinocembrin or a salt thereof 0.001 to 5,000 ppm by weight, and steviol glycoside 0.01 to 500,000 ppm by weight;
preferably,
γ-glutamyl peptide or a salt thereof 0.01 to 50 ppm by weight, pinocembrin or a salt thereof 0.01 to 1,000 ppm by weight, and steviol glycoside 0.05 to 50,000 ppm by weight;
more preferably,
γ-glutamyl peptide or a salt thereof 0.05 to 10 ppm by weight, pinocembrin or a salt thereof 0.05 to 500 ppm by weight, and steviol glycoside 0.1 to 5,000 ppm by weight;
further preferably,
γ-glutamyl peptide or a salt thereof 0.1 to 5 ppm by weight, pinocembrin or a salt thereof 0.07 to 100 ppm by weight, and steviol glycoside 1 to 2,000 ppm by weight;
further more preferably,
γ-glutamyl peptide or a salt thereof 0.3 to 5 ppm by weight, pinocembrin or a salt thereof 0.1 to 50 ppm by weight, and steviol glycoside 10 to 1,000 ppm by weight.
at least one γ-glutamyl peptide selected from the group consisting of γ-Glu-Val-Gly and γ-Glu-Abu, or a salt thereof (preferably, γ-Glu-Val-Gly or a salt thereof) 0.01 to 200 ppm by weight,
naringenin or a salt thereof 0.001 to 5,000 ppm by weight, and at least one steviol glycoside selected from the group consisting of rebaudioside A, rebaudioside D, rebaudioside M, and rebaudioside E 0.01 to 500,000 ppm by weight;
preferably,
at least one γ-glutamyl peptide selected from the group consisting of γ-Glu-Val-Gly and γ-Glu-Abu, or a salt thereof (preferably, γ-Glu-Val-Gly or a salt thereof) 0.01 to 50 ppm by weight,
naringenin or a salt thereof 0.01 to 1,000 ppm by weight, and at least one steviol glycoside selected from the group consisting of rebaudioside A, rebaudioside D, rebaudioside M, and rebaudioside E 0.05 to 50,000 ppm by weight;
more preferably,
at least one γ-glutamyl peptide selected from the group consisting of γ-Glu-Val-Gly and γ-Glu-Abu, or a salt thereof (preferably, γ-Glu-Val-Gly or a salt thereof) 0.05 to 10 ppm by weight,
naringenin or a salt thereof 0.05 to 500 ppm by weight, and at least one steviol glycoside selected from the group consisting of rebaudioside A, rebaudioside D, rebaudioside M, and rebaudioside E 0.1 to 5,000 ppm by weight;
further preferably,
at least one γ-glutamyl peptide selected from the group consisting of γ-Glu-Val-Gly and γ-Glu-Abu, or a salt thereof (preferably, γ-Glu-Val-Gly or a salt thereof) 0.1 to 5 ppm by weight,
naringenin or a salt thereof 0.07 to 100 ppm by weight, and at least one steviol glycoside selected from the group consisting of rebaudioside A, rebaudioside D, rebaudioside M, and rebaudioside E 1 to 2,000 ppm by weight;
further more preferably,
at least one γ-glutamyl peptide selected from the group consisting of γ-Glu-Val-Gly and γ-Glu-Abu, or a salt thereof (preferably, γ-Glu-Val-Gly or a salt thereof) 0.3 to 5 ppm by weight,
naringenin or a salt thereof 0.1 to 50 ppm by weight, and at least one steviol glycoside selected from the group consisting of rebaudioside A, rebaudioside D, rebaudioside M, and rebaudioside E 10 to 1,000 ppm by weight.
γ-glutamyl peptide or a salt thereof 0.01 to 200 ppm by weight, at least one compound selected from the group consisting of naringenin, hesperetin, and pinocembrin, or a salt thereof 0.001 to 5,000 ppm by weight,
sweet substance 0.01 to 500,000 ppm by weight, and lactone 0.3 to 200 ppb by weight;
preferably,
γ-glutamyl peptide or a salt thereof 0.01 to 50 ppm by weight,
at least one compound selected from the group consisting of naringenin, hesperetin, and pinocembrin, or a salt thereof 0.01 to 1,000 ppm by weight,
sweet substance 0.05 to 50,000 ppm by weight, and lactone 0.5 to 150 ppb by weight;
more preferably,
γ-glutamyl peptide or a salt thereof 0.05 to 10 ppm by weight, at least one compound selected from the group consisting of naringenin, hesperetin, and pinocembrin, or a salt thereof 0.05 to 500 ppm by weight,
sweet substance 0.1 to 5,000 ppm by weight, and lactone 1 to 100 ppb by weight;
further preferably,
γ-glutamyl peptide or a salt thereof 0.1 to 5 ppm by weight,
at least one compound selected from the group consisting of naringenin, hesperetin, and pinocembrin, or a salt thereof 0.07 to 100 ppm by weight,
sweet substance 1 to 2,000 ppm by weight, and
lactone 3 to 50 ppb by weight;
further more preferably,
γ-glutamyl peptide or a salt thereof 0.3 to 5 ppm by weight,
at least one compound selected from the group consisting of naringenin, hesperetin, and pinocembrin, or a salt thereof 0.1 to 50 ppm by weight,
sweet substance 10 to 1,000 ppm by weight, and
lactone 5 to 20 ppb by weight.
γ-glutamyl peptide or a salt thereof 0.01 to 200 ppm by weight, at least one compound selected from the group consisting of naringenin, hesperetin, and pinocembrin, or a salt thereof 0.001 to 5,000 ppm by weight,
steviol glycoside 0.01 to 500,000 ppm by weight, and
lactone 0.3 to 200 ppb by weight;
preferably,
γ-glutamyl peptide or a salt thereof 0.01 to 50 ppm by weight,
at least one compound selected from the group consisting of naringenin, hesperetin, and pinocembrin, or a salt thereof 0.01 to 1,000 ppm by weight,
steviol glycoside 0.05 to 50,000 ppm by weight, and lactone 0.5 to 150 ppb by weight;
more preferably,
γ-glutamyl peptide or a salt thereof 0.05 to 10 ppm by weight, at least one compound selected from the group consisting of naringenin, hesperetin, and pinocembrin, or a salt thereof 0.05 to 500 ppm by weight,
steviol glycoside 0.1 to 5,000 ppm by weight, and lactone 1 to 100 ppb by weight;
further preferably,
γ-glutamyl peptide or a salt thereof 0.1 to 5 ppm by weight,
at least one compound selected from the group consisting of naringenin, hesperetin, and pinocembrin, or a salt thereof 0.07 to 100 ppm by weight,
steviol glycoside 1 to 2,000 ppm by weight, and lactone 3 to 50 ppb by weight;
further more preferably,
γ-glutamyl peptide or a salt thereof 0.3 to 5 ppm by weight, at least one compound selected from the group consisting of naringenin, hesperetin, and pinocembrin, or a salt thereof 0.1 to 50 ppm by weight,
steviol glycoside 10 to 1,000 ppm by weight, and lactone 5 to 20 ppb by weight.
γ-glutamyl peptide or a salt thereof 0.01 to 200 ppm by weight, naringenin or a salt thereof 0.001 to 5,000 ppm by weight, sweet substance 0.01 to 500,000 ppm by weight, and lactone 0.3 to 200 ppb by weight;
preferably,
γ-glutamyl peptide or a salt thereof 0.01 to 50 ppm by weight, naringenin or a salt thereof 0.01 to 1,000 ppm by weight, sweet substance 0.05 to 50,000 ppm by weight, and
lactone 0.5 to 150 ppb by weight;
more preferably,
γ-glutamyl peptide or a salt thereof 0.05 to 10 ppm by weight, naringenin or a salt thereof 0.05 to 500 ppm by weight,
sweet substance 0.1 to 5,000 ppm by weight, and lactone 1 to 100 ppb by weight;
further preferably,
γ-glutamyl peptide or a salt thereof 0.1 to 5 ppm by weight, naringenin or a salt thereof 0.07 to 100 ppm by weight,
sweet substance 1 to 2,000 ppm by weight, and lactone 3 to 50 ppb by weight;
further more preferably,
γ-glutamyl peptide or a salt thereof 0.3 to 5 ppm by weight, naringenin or a salt thereof 0.1 to 50 ppm by weight,
sweet substance 10 to 1,000 ppm by weight, and
lactone 5 to 20 ppb by weight.
γ-glutamyl peptide or a salt thereof 0.01 to 200 ppm by weight, naringenin or a salt thereof 0.001 to 5,000 ppm by weight, steviol glycoside 0.01 to 500,000 ppm by weight, and lactone 0.3 to 200 ppb by weight;
preferably,
γ-glutamyl peptide or a salt thereof 0.01 to 50 ppm by weight, naringenin or a salt thereof 0.01 to 1,000 ppm by weight, steviol glycoside 0.05 to 50,000 ppm by weight, and lactone 0.5 to 150 ppb by weight;
more preferably,
γ-glutamyl peptide or a salt thereof 0.05 to 10 ppm by weight, naringenin or a salt thereof 0.05 to 500 ppm by weight, steviol glycoside 0.1 to 5,000 ppm by weight, and lactone 1 to 100 ppb by weight;
further preferably,
γ-glutamyl peptide or a salt thereof 0.1 to 5 ppm by weight, naringenin or a salt thereof 0.07 to 100 ppm by weight, steviol glycoside 1 to 2,000 ppm by weight, and
lactone 3 to 50 ppb by weight;
further more preferably,
γ-glutamyl peptide or a salt thereof 0.3 to 5 ppm by weight, naringenin or a salt thereof 0.1 to 50 ppm by weight,
steviol glycoside 10 to 1,000 ppm by weight, and lactone 5 to 20 ppb by weight.
at least one γ-glutamyl peptide selected from the group consisting of γ-Glu-Val-Gly and γ-Glu-Abu, or a salt thereof (preferably, γ-Glu-Val-Gly or a salt thereof) 0.01 to 200 ppm by weight,
naringenin or a salt thereof 0.001 to 5,000 ppm by weight,
at least one steviol glycoside selected from the group consisting of rebaudioside A, rebaudioside D, rebaudioside M, and rebaudioside E 0.01 to 500,000 ppm by weight, and lactone 0.3 to 200 ppb by weight;
preferably,
at least one γ-glutamyl peptide selected from the group consisting of γ-Glu-Val-Gly and γ-Glu-Abu, or a salt thereof (preferably, γ-Glu-Val-Gly or a salt thereof) 0.01 to 50 ppm by weight,
naringenin or a salt thereof 0.01 to 1,000 ppm by weight,
at least one steviol glycoside selected from the group consisting of rebaudioside A, rebaudioside D, rebaudioside M, and rebaudioside E 0.05 to 50,000 ppm by weight, and lactone 0.5 to 150 ppb by weight;
more preferably,
at least one γ-glutamyl peptide selected from the group consisting of γ-Glu-Val-Gly and γ-Glu-Abu, or a salt thereof (preferably, γ-Glu-Val-Gly or a salt thereof) 0.05 to 10 ppm by weight,
naringenin or a salt thereof 0.05 to 500 ppm by weight,
at least one steviol glycoside selected from the group consisting of rebaudioside A, rebaudioside D, rebaudioside M, and rebaudioside E 0.1 to 5,000 ppm by weight, and
lactone 1 to 100 ppb by weight;
further preferably,
at least one γ-glutamyl peptide selected from the group consisting of γ-Glu-Val-Gly and γ-Glu-Abu, or a salt thereof (preferably, γ-Glu-Val-Gly or a salt thereof) 0.1 to 5 ppm by weight,
naringenin or a salt thereof 0.07 to 100 ppm by weight,
at least one steviol glycoside selected from the group consisting of rebaudioside A, rebaudioside D, rebaudioside M, and rebaudioside E 1 to 2,000 ppm by weight, and lactone 3 to 50 ppb by weight;
further more preferably,
at least one γ-glutamyl peptide selected from the group consisting of γ-Glu-Val-Gly and γ-Glu-Abu, or a salt thereof (preferably, γ-Glu-Val-Gly or a salt thereof) 0.3 to 5 ppm by weight,
naringenin or a salt thereof 0.1 to 50 ppm by weight,
at least one steviol glycoside selected from the group consisting of rebaudioside A, rebaudioside D, rebaudioside M, and rebaudioside E 10 to 1,000 ppm by weight, and lactone 5 to 20 ppb by weight.

In a preferred embodiment of the taste quality-improving agent of the present invention, the amount of the composition added to an oral product, when converted to the weight of a free form, with respect to the total weight of the oral product, is within the following range:
γ-glutamyl peptide or a salt thereof 0.01 to 200 ppm by weight, and
at least one compound selected from the group consisting of naringenin, hesperetin, and pinocembrin, or a salt thereof 0.001 to 5,000 ppm by weight;
preferably,
γ-glutamyl peptide or a salt thereof 0.01 to 50 ppm by weight, and
at least one compound selected from the group consisting of naringenin, hesperetin, and pinocembrin, or a salt thereof 0.01 to 1,000 ppm by weight;
more preferably,
γ-glutamyl peptide or a salt thereof 0.05 to 10 ppm by weight, and
at least one compound selected from the group consisting of naringenin, hesperetin, and pinocembrin, or a salt thereof 0.05 to 500 ppm by weight;
further preferably,
γ-glutamyl peptide or a salt thereof 0.1 to 5 ppm by weight, and at least one compound selected from the group consisting of naringenin, hesperetin, and pinocembrin, or a salt thereof 0.07 to 100 ppm by weight;
further more preferably,
γ-glutamyl peptide or a salt thereof 0.3 to 5 ppm by weight, and at least one compound selected from the group consisting of naringenin, hesperetin, and pinocembrin, or a salt thereof 0.1 to 50 ppm by weight.
γ-glutamyl peptide or a salt thereof 0.01 to 200 ppm by weight, and
naringenin or a salt thereof 0.001 to 5,000 ppm by weight; preferably,
γ-glutamyl peptide or a salt thereof 0.01 to 50 ppm by weight, and
naringenin or a salt thereof 0.01 to 1,000 ppm by weight;
more preferably,
γ-glutamyl peptide or a salt thereof 0.05 to 10 ppm by weight, and
naringenin or a salt thereof 0.05 to 500 ppm by weight;
further preferably,
γ-glutamyl peptide or a salt thereof 0.1 to 5 ppm by weight, and
naringenin or a salt thereof 0.07 to 100 ppm by weight;
further more preferably,
γ-glutamyl peptide or a salt thereof 0.3 to 5 ppm by weight, and naringenin or a salt thereof 0.1 to 50 ppm by weight.
γ-glutamyl peptide or a salt thereof 0.01 to 200 ppm by weight, and
hesperetin or a salt thereof 0.001 to 5,000 ppm by weight; preferably,
γ-glutamyl peptide or a salt thereof 0.01 to 50 ppm by weight, and
hesperetin or a salt thereof 0.01 to 1,000 ppm by weight;
more preferably,
γ-glutamyl peptide or a salt thereof 0.05 to 10 ppm by weight, and
hesperetin or a salt thereof 0.05 to 500 ppm by weight;
further preferably,
γ-glutamyl peptide or a salt thereof 0.1 to 5 ppm by weight, and hesperetin or a salt thereof0.07 to 100 ppm by weight;
further more preferably,
γ-glutamyl peptide or a salt thereof 0.3 to 5 ppm by weight, and hesperetin or a salt thereof 0.1 to 50 ppm by weight.
γ-glutamyl peptide or a salt thereof 0.01 to 200 ppm by weight, and
pinocembrin or a salt thereof 0.001 to 5,000 ppm by weight; preferably,
γ-glutamyl peptide or a salt thereof 0.01 to 50 ppm by weight, and
pinocembrin or a salt thereof 0.01 to 1,000 ppm by weight;
more preferably,
γ-glutamyl peptide or a salt thereof 0.05 to 10 ppm by weight, and
pinocembrin or a salt thereof 0.05 to 500 ppm by weight; further preferably,
γ-glutamyl peptide or a salt thereof 0.1 to 5 ppm by weight, and pinocembrin or a salt thereof 0.07 to 100 ppm by weight; further more preferably,
γ-glutamyl peptide or a salt thereof 0.3 to 5 ppm by weight, and pinocembrin or a salt thereof 0.1 to 50 ppm by weight.
at least one γ-glutamyl peptide selected from the group consisting of γ-Glu-Val-Gly and γ-Glu-Abu, or a salt thereof (preferably, γ-Glu-Val-Gly or a salt thereof) 0.01 to 200 ppm by weight, and
naringenin or a salt thereof 0.001 to 5,000 ppm by weight; preferably,
at least one γ-glutamyl peptide selected from the group consisting of γ-Glu-Val-Gly and γ-Glu-Abu, or a salt thereof (preferably, γ-Glu-Val-Gly or a salt thereof) 0.01 to 50 ppm by weight, and
naringenin or a salt thereof 0.01 to 1,000 ppm by weight;
more preferably,
at least one γ-glutamyl peptide selected from the group consisting of γ-Glu-Val-Gly and γ-Glu-Abu, or a salt thereof (preferably, γ-Glu-Val-Gly or a salt thereof) 0.05 to 10 ppm by weight, and
naringenin or a salt thereof 0.05 to 500 ppm by weight;
further preferably,
at least one γ-glutamyl peptide selected from the group consisting of γ-Glu-Val-Gly and γ-Glu-Abu, or a salt thereof (preferably, γ-Glu-Val-Gly or a salt thereof) 0.1 to 5 ppm by weight, and
naringenin or a salt thereof 0.07 to 100 ppm by weight;
further more preferably,
at least one γ-glutamyl peptide selected from the group consisting of γ-Glu-Val-Gly and γ-Glu-Abu, or a salt thereof (preferably, γ-Glu-Val-Gly or a salt thereof) 0.3 to 5 ppm by weight, and
naringenin or a salt thereof 0.1 to 50 ppm by weight.
γ-glutamyl peptide or a salt thereof 0.01 to 200 ppm by weight, at least one compound selected from the group consisting of naringenin, hesperetin, and pinocembrin, or a salt thereof 0.001 to 5,000 ppm by weight, and
lactone 0.3 to 200 ppb by weight;
preferably,
γ-glutamyl peptide or a salt thereof 0.01 to 50 ppm by weight, at least one compound selected from the group consisting of naringenin, hesperetin, and pinocembrin, or a salt thereof 0.01 to 1,000 ppm by weight, and
lactone 0.5 to 150 ppb by weight;
more preferably,
γ-glutamyl peptide or a salt thereof 0.05 to 10 ppm by weight, at least one compound selected from the group consisting of naringenin, hesperetin, and pinocembrin, or a salt thereof 0.05 to 500 ppm by weight, and
lactone 1 to 100 ppb by weight;
further preferably,
γ-glutamyl peptide or a salt thereof 0.1 to 5 ppm by weight,
at least one compound selected from the group consisting of naringenin, hesperetin, and pinocembrin, or a salt thereof 0.07 to 100 ppm by weight, and
lactone 3 to 50 ppb by weight;
further more preferably,
γ-glutamyl peptide or a salt thereof 0.3 to 5 ppm by weight,
at least one compound selected from the group consisting of naringenin, hesperetin, and pinocembrin, or a salt thereof 0.1 to 50 ppm by weight, and
lactone 5 to 20 ppb by weight.
γ-glutamyl peptide or a salt thereof 0.01 to 200 ppm by weight, naringenin or a salt thereof 0.001 to 5,000 ppm by weight, and lactone 0.3 to 200 ppb by weight;
preferably,
γ-glutamyl peptide or a salt thereof 0.01 to 50 ppm by weight, naringenin or a salt thereof 0.01 to 1,000 ppm by weight, and lactone 0.5 to 150 ppb by weight;
more preferably,
γ-glutamyl peptide or a salt thereof 0.05 to 10 ppm by weight, naringenin or a salt thereof 0.05 to 500 ppm by weight, and lactone 1 to 100 ppb by weight;
further preferably,
γ-glutamyl peptide or a salt thereof 0.1 to 5 ppm by weight, naringenin or a salt thereof 0.07 to 100 ppm by weight, and lactone 3 to 50 ppb by weight;
further more preferably,
γ-glutamyl peptide or a salt thereof 0.3 to 5 ppm by weight, naringenin or a salt thereof 0.1 to 50 ppm by weight, and lactone 5 to 20 ppb by weight.
at least one γ-glutamyl peptide selected from the group consisting of γ-Glu-Val-Gly and γ-Glu-Abu, or a salt thereof (preferably, γ-Glu-Val-Gly or a salt thereof) 0.01 to 200 ppm by weight,
naringenin or a salt thereof 0.001 to 5,000 ppm by weight, and lactone 0.3 to 200 ppb by weight;
preferably,
at least one γ-glutamyl peptide selected from the group consisting of γ-Glu-Val-Gly and γ-Glu-Abu, or a salt thereof (preferably, γ-Glu-Val-Gly or a salt thereof) 0.01 to 50 ppm by weight,
naringenin or a salt thereof 0.01 to 1,000 ppm by weight, and lactone 0.5 to 150 ppb by weight;
more preferably,
at least one γ-glutamyl peptide selected from the group consisting of γ-Glu-Val-Gly and γ-Glu-Abu, or a salt thereof (preferably, γ-Glu-Val-Gly or a salt thereof) 0.05 to 10 ppm by weight,
naringenin or a salt thereof 0.05 to 500 ppm by weight, and
lactone 1 to 100 ppb by weight;
further preferably,
at least one γ-glutamyl peptide selected from the group consisting of γ-Glu-Val-Gly and γ-Glu-Abu, or a salt thereof (preferably, γ-Glu-Val-Gly or a salt thereof) 0.1 to 5 ppm by weight,
naringenin or a salt thereof 0.07 to 100 ppm by weight, and lactone 3 to 50 ppb by weight;
further more preferably,
at least one γ-glutamyl peptide selected from the group consisting of γ-Glu-Val-Gly and γ-Glu-Abu, or a salt thereof (preferably, γ-Glu-Val-Gly or a salt thereof) 0.3 to 5 ppm by weight,
naringenin or a salt thereof 0.1 to 50 ppm by weight, and lactone 5 to 20 ppb by weight.

The present invention also includes a method for improving taste quality of a sweet substance, comprising adding components (A) and (B) to an oral product containing the sweet substance (sometimes referred to as the "method of the present invention" in the present specification).

The method of the present invention may further comprise adding component (D) to an oral product.

The definitions of the components (A), component (B), sweet substance, and component (D) that can be used in the method of the present invention are as described above.

In the present invention, the "oral product" means a substance that can be ingested or taken orally, and specific examples thereof include food, seasoning, pharmaceutical product, quasi-drug, cosmetic and perfumery, and the like. In the present invention, the "food" broadly includes foods that can be ingested orally (excluding medicine), and unless otherwise specified, also includes so-called foods, beverages, seasonings, supplements, and the like. Food is a concept also including food compositions.

The oral product in the present invention is not particularly limited as long as it contains a sweet substance and is required to improve the taste quality of the sweet substance.

In the present invention, "food" refers to the "food" defined in Article 4 of the Food Sanitation Act, i.e., food and beverage, and preferably refers to solid food, semi-solid food, liquid food, or beverage.

Solid food is not particularly limited, and specific examples include chewing gum; candy and other sweets; chocolate; tabletop sweeteners; powdered instant beverages such as powdered juice, powdered cocoa, powdered cola, and instant coffee; frozen desserts such as ice cream and popsicle; tablet mouth freshener such as ramune candy; baked confectioneries such as cake and cookie; steamed confectioneries such as bun; snack; dried fruits; and solid supplements.

Semi-solid food is not particularly limited, and examples include yogurt, cream, jelly, jam, and the like.

Liquid food is not particularly limited, and examples include soup, sauces of fruit and vegetable, and the like.

Beverages include, but are not limited to, carbonated drinks, fruit juice drinks, flavored drinks, sports drinks, energy drinks, nutritional supplements, coffee, cocoa, black tea, Japanese tea, Chinese tea, dairy drinks, lactic fermenting beverage, mineral water, liquid supplements, and the like.

The food of the present invention also includes health functional foods such as foods for specified health uses and foods with nutrient function claims; special purpose foods such as foods for the sick and foods for the elderly; health supplements, and the like.

The pharmaceutical product or quasi-drug of the present invention are taken orally or applied to the oral cavity and contain a sweet substance.

Examples of a pharmaceutical product containing a sweet substance as a corrigent include cold medicine, stomach medicine, headache medicine, and the like. Examples of quasi-drugs include throat fresheners, stomachic freshener, oropharyngeal medicine, gargle, mouthwash, toothpaste, mouth freshener, and the like.

Cosmetic and perfumery include lip rouge and the like.

The food product may be provided (sold, distributed) in a form for eating as is, or may be provided in a form that requires a predetermined processing or cooking to have a form suitable for eating. For example, the food product may be eaten or drunk after preparation, before or at the time of eating, into a form suitable for eating. For example, in the case of a beverage such as a soft drink, it may be provided as a packaged beverage that can be taken as is, or as a concentrate such as a powder that can be diluted and drunk.

In addition, the food product is not limited to general food products, but also includes what is called health food products and medical food products such as nutrition aid food product (supplement), foods with nutrient function claims, foods for specified health uses, and the like. For example, the food products exemplified above may be provided as general food products, or as health food products or medical food products.

The method and conditions for adding the components (A), (B), and (D) of the present invention to an oral product (e.g., food, oral medicine, etc.) are not particularly limited, and addition can be performed by a method known per se or a method analogous thereto, according to the kind and form of the components (A), (B), and (D) of the present invention, the kind of the oral product to which the components (A), (B), and (D) are added, and the like. The time when the components (A), (B), and (D) are added to an oral product is not particularly limited, and they can be added, for example, during the production of the oral product, after the production of the oral product, or the like. The components (A), (B), and (D) may also be added to a raw material before producing the oral product. The components (A), (B), and (D) may also be added at the same time or at different times, and the order of addition is not particularly limited.

In the present invention, the amount of the components (A), (B), and (D) to be added to the oral product can be set according to the amount of a sweet substance to be added to the oral product.

The addition amount of the components (A), (B), and (D) to the oral product (amount of components (A), (B), and (D) to be added to the oral product) and preferable ranges thereof in the method of the present invention are as described above.

In addition, the content of the sweet substance in the oral product (amount of sweet substance to be added to the oral product) and preferable ranges thereof in the method of the present invention are as described above.

The method of the present invention may include treatments and steps generally included in the production step of oral products.

In the method of the present invention, methods for adding components (A), (B), and (D) to oral products include direct addition to oral products, addition after dilution with water or a solvent, and the like, and the form of addition is not particularly limited. In addition, components (A), (B), and (D) may be added to the oral product at any time, including addition to starting materials before production of oral products, during production, after completion, immediately before eating, during eating, and the like. Components (A), (B), and (D) may be added at the same time or at different times. In addition, various definitions and preferable ranges are as described above.

The present invention also includes a method for producing an oral product with an improved taste quality of sweet substance, comprising adding components (A) and (B) to the oral product containing a sweet substance (sometimes to be referred to as "the production method of the present invention" in the present specification).

The production method of the present invention may further comprise adding component (D) to an oral product.

The definitions of component (A), component (B), sweet substance, component (D), oral product, and the like that can be used in the production method of the present invention are as described above.

The amounts of components (A), (B), and (D) to be added to the oral product (the amounts of components (A), (B), and (D) added to the oral product) and preferable ranges thereof in the production method of the present invention are as described above.

In addition, the content of the sweet substance in the oral product (amount of sweet substance to be added to the oral product) and preferable ranges thereof in the production method of the present invention are as described above.

The production method of the present invention may further include a step of adding other components (components other than components (A), (B), and (D)). The "other components" here are as described above. It may also include treatments and steps generally included in the production step of food and beverage, such as a step of dissolving, a step of filling in a container, and a step of sterilization.

Oral products obtained by the production method of the present invention are specifically oral products with an improved taste quality of sweet substance.

In the production method of the present invention, oral products can be produced using the same starting materials and the same method as those for general oral products, except that components (A), (B), and (D) are added. Components (A), (B), and (D) may be added at any stage of the production steps of oral products. That is, components (A), (B), and (D) may be added to raw materials of oral products, may be added to oral products in the process of production, or may be added to finished food and beverage. Further, components (A), (B), and (D) may be added only once, or may be added in two or more divided portions. When components (A), (B), and (D) are added, they may be added at the same time to the oral product or raw materials thereof, or may be added to the oral product or raw materials thereof each separately, or separately in any combination.

The present invention also includes oral products comprising components (A), (B), and (C) (also to be referred to as "the oral product of the present invention" in the present specification).

The oral product of the present invention may further comprise component (D).

The definitions of the components (A), (B), (C), and (D), oral product, and the like in the oral product of the present invention are as described above.

The contents of components (A), (B), (C), and (D) in an oral product (amounts of components (A), (B), (C), and (D) to be added to an oral product) and preferable ranges thereof in the oral product of the present invention are as described above.

The present invention also relates to a sweetener composition comprising (B-3) pinocembrin or a salt thereof, and (C) a sweet substance (sometimes referred to as "the composition (II) of the present invention" in the present specification).

The present invention also relates to an agent for improving taste quality of a sweet substance, comprising pinocembrin or a salt thereof (sometimes referred to as "the taste quality-improving agent (II) of the present invention" in the present specification).

The present invention also relates to a method for improving taste quality of a sweet substance, comprising adding pinocembrin or a salt thereof to an oral product containing the sweet substance (sometimes referred to as "the method (II) of the present invention" in the present specification).

The present invention also relates to a method for producing an oral product with improved taste quality of a sweet substance, comprising adding pinocembrin or a salt thereof to an oral product containing the sweet substance (sometimes referred to as "the production method (II) of the present invention" in the present specification).

The present invention also relates to an oral product comprising (B-3) pinocembrin or a salt thereof, and (C) a sweet substance (sometimes referred to as "the oral product of the present invention (II)" in the present specification).

The definitions of the component (B-3) pinocembrin or a salt thereof, component (C) sweet substance, oral product, and the like that can be used in the composition (II) of the present invention, taste quality-improving agent (II) of the present invention, method (II) of the present invention, production method (II) of the present invention, and oral product (II) of the present invention are as described above.

The amount (concentration) of component (B-3) in the composition (II) of the present invention to be added to an oral product is such that the concentration the component (B-3) at the time of eating is within a range desired from the aspect of improving the taste quality of sweet substances. For example, it is used such that its concentration at the time of eating is generally 0.001 ppm by weight or more, preferably 0.01 ppm by weight or more, more preferably 0.05 ppm by weight or more, further preferably 0.07 ppm by weight or more, further more preferably 0.1 ppm by weight or more, and the upper limit is generally 5,000 ppm by weight or less, preferably 1,000 ppm by weight or less, more preferably 500 ppm by weight or less, further preferably 100 ppm by weight or less, further more preferably 50 ppm by weight or less, with respect to the total weight of the oral product, when converted to the weight of a free form.

Specifically, the concentration is generally 0.001 to 5,000 ppm by weight, preferably 0.01 to 1,000 ppm by weight, more preferably 0.05 to 500 ppm by weight, further preferably 0.07 to 100 ppm by weight, further more preferably 0.1 to 50 ppm by weight.

When the taste quality-improving agent (II) of the present invention is used to improve the taste quality of sweet substances, the amount (concentration) of component (B-3) to be added to an oral product is the same as above.

The amount (concentration) of (C) sweet substance in the composition (II) of the present invention to be added to an oral product is such that the concentration at the time of eating is within a range desired from the aspect of improving the taste quality of sweet substances. For example, the component (C) sweet substance is used such that its concentration at the time of eating is generally 0.01 ppm by weight or more, preferably 0.05 ppm by weight or more, more preferably 0.1 ppm by weight or more, further preferably 1 ppm by weight or more, further more preferably 10 ppm by weight or more, and the upper limit is generally 500,000 ppm by weight or less, preferably 50,000 ppm by weight or less, more preferably 5,000 ppm by weight or less, further preferably 2,000 ppm by weight, further more preferably 1,000 ppm by weight, with respect to the total weight of the oral product.

Specifically, the concentration is generally 0.01 to 500,000 ppm by weight, preferably 0.05 to 50,000 ppm by weight, more preferably 0.1 to 5,000 ppm by weight, further preferably 1 to 2,000 ppm by weight, further more preferably 10 to 1,000 ppm by weight.

When the taste quality-improving agent (II) of the present invention is used to improve the taste quality of sweet substances, the content (concentration) of the sweet substance in an oral product is the same as above.

The definition of the concentration at the time of eating of component (B-3) and component (C) is the same as the aforementioned definition of the concentration at the time of eating of component (B) and component (C).

The total amount of components (B-3) and (C) contained in the composition (II) of the present invention is, for example, generally 0.001% by weight or more, preferably 0.1% by weight or more, more preferably 1% by weight or more, with respect to the total weight of the composition of the present invention. The amount is generally 100% by weight or less, preferably 99.9% by weight or less, more preferably 99% by weight or less, further preferably 95% by weight or less, further more preferably 90% by weight or less, with respect to the composition of the present invention.

Specifically, the amount is generally 0.001 to 100% by weight, preferably 0.1 to 100% by weight, more preferably 1 to 100% by weight, further preferably 1 to 99.9% by weight, further more preferably 1 to 99% by weight.

The concentration and content ratio of component (B-3) in the composition (II) of the present invention can be appropriately set according to various conditions such as the kind of component (C), and the kind of a food for which the composition of the present invention is used.

The weight ratio of components (B-3) and (C) ((B-3):(C)) in the composition (II) of the present invention is generally 1 : 0.001-10,000, preferably 1 : 0.01-10,000, more preferably 1 : 0.05-5,000, further preferably 1 : 0.1-3,000, further more preferably 1 : 1-1,000, when converted to the weight of a free form, from the aspect of improving the taste quality of sweet substances.

The composition (II) of the present invention and the taste quality-improving agent (II) of the present invention can be produced in the same manner as the aforementioned composition of the present invention and the taste quality-improving agent of the present invention, except that component (B-3) is contained instead of components (A) and (B).

A preferred embodiment of composition (II) of the present invention is one in which the amount added to the oral product, when converted to the weight of a free form, is within the following range with respect to the total weight of the oral product.

pinocembrin or a salt thereof 0.001 to 5,000 ppm by weight, and sweet substance 0.01 to 500,000 ppm by weight;
preferably,
pinocembrin or a salt thereof 0.01 to 1,000 ppm by weight, and sweet substance 0.05 to 50,000 ppm by weight;
more preferably,
pinocembrin or a salt thereof 0.05 to 500 ppm by weight, and sweet substance 0.1 to 5,000 ppm by weight;
further preferably,
pinocembrin or a salt thereof 0.07 to 100 ppm by weight, and sweet substance 1 to 2,000 ppm by weight;
further more preferably,
pinocembrin or a salt thereof 0.1 to 50 ppm by weight, and sweet substance 10 to 1,000 ppm by weight.

pinocembrin or a salt thereof 0.001 to 5,000 ppm by weight, and steviol glycoside 0.01 to 500,000 ppm by weight;
preferably,
pinocembrin or a salt thereof 0.01 to 1,000 ppm by weight, and steviol glycoside 0.05 to 50,000 ppm by weight;
more preferably,
pinocembrin or a salt thereof 0.05 to 500 ppm by weight, and steviol glycoside 0.1 to 5,000 ppm by weight;
further preferably,
pinocembrin or a salt thereof 0.07 to 100 ppm by weight, and
steviol glycoside 1 to 2,000 ppm by weight;
further more preferably,
pinocembrin or a salt thereof 0.1 to 50 ppm by weight, and steviol glycoside 10 to 1,000 ppm by weight.

pinocembrin or a salt thereof 0.001 to 5,000 ppm by weight, and at least one steviol glycoside selected from the group consisting of rebaudioside A, rebaudioside D, rebaudioside M, and rebaudioside E 0.01 to 500,000 ppm by weight;
preferably,
pinocembrin or a salt thereof 0.01 to 1,000 ppm by weight, and at least one steviol glycoside selected from the group consisting of rebaudioside A, rebaudioside D, rebaudioside M, and rebaudioside E 0.05 to 50,000 ppm by weight;
more preferably,
pinocembrin or a salt thereof 0.05 to 500 ppm by weight, and at least one steviol glycoside selected from the group consisting of rebaudioside A, rebaudioside D, rebaudioside M, and rebaudioside E 0.1 to 5,000 ppm by weight;
further preferably,
pinocembrin or a salt thereof 0.07 to 100 ppm by weight, and at least one steviol glycoside selected from the group consisting of rebaudioside A, rebaudioside D, rebaudioside M, and rebaudioside E 1 to 2,000 ppm by weight;
further more preferably,
pinocembrin or a salt thereof 0.1 to 50 ppm by weight, and at least one steviol glycoside selected from the group consisting of rebaudioside A, rebaudioside D, rebaudioside M, and rebaudioside E 10 to 1,000 ppm by weight.

The method (II) of the present invention and the production method (II) of the present invention can be performed in the same manner as the aforementioned method of the present invention and the production method of the present invention, except that component (B-3) is added instead of adding components (A) and (B).

The addition amount of the component (B-3) to the oral product (amount of component (B-3) to be added to the oral product) and preferable range thereof in the method (II) of the present invention and the production method (II) of the present invention are as described above.

In addition, the content of the sweet substance in the oral product (amount of sweet substance to be added to the oral product) and preferable range thereof in the method (II) of the present invention and the production method (II) of the present invention are as described above.

The contents of components (B-3) and (C) in an oral product (amounts of components (B-3) and (C) to be added to an oral product) and preferable ranges thereof in the oral product (II) of the present invention are as described above.

The present invention also relates to a sweetener composition comprising
(B-1) naringenin or a salt thereof,
(C) a sweet substance, and
(D) a lactone (sometimes referred to as "the composition (III) of the present invention" in the present specification).

The present invention also relates to an agent for improving taste quality of a sweet substance, comprising
(B-1) naringenin or a salt thereof, and
(D) a lactone (sometimes referred to as "the taste quality-improving agent (III) of the present invention" in the present specification).

The present invention also relates to a method for improving taste quality of a sweet substance, comprising adding (B-1) naringenin or a salt thereof, and
(D) a lactone to an oral product containing the sweet substance (sometimes referred to as "the method (III) of the present invention" in the present specification).

The present invention also relates to a method for producing an oral product with improved taste quality of a sweet substance, comprising adding
(B-1) naringenin or a salt thereof, and
(D) a lactone to an oral product containing the sweet substance (sometimes referred to as "the production method (III) of the present invention" in the present specification).

The present invention also relates to an oral product comprising
(B-1) naringenin or a salt thereof,
(C) a sweet substance, and
(D) a lactone (sometimes referred to as "the oral product (III) of the present invention" in the present specification).

The definitions of the component (B-1) naringenin or a salt thereof, component (C) sweet substance, component (D) lactone, oral product, and the like that can be used in the composition (III) of the present invention, taste quality-improving agent (III) of the present invention, method (III) of the present invention, production method (III) of the present invention, and oral product (III) of the present invention are as described above.

The amount (concentration) of component (B-1) in the composition (III) of the present invention to be added to an oral product is such that the concentration of the component (B-1) at the time of eating is within a range desired from the aspect of improving the taste quality of sweet substances. For example, it is used such that its concentration at the time of eating is generally 0.001 ppm by weight or more, preferably 0.01 ppm by weight or more, more preferably 0.05 ppm by weight or more, further preferably 0.07 ppm by weight or more, further more preferably 0.1 ppm by weight or more, and the upper limit is generally 5,000 ppm by weight or less, preferably 1,000 ppm by weight or less, more preferably 500 ppm by weight or less, further preferably 100 ppm by weight or less, further more preferably 50 ppm by weight or less, with respect to the total weight of the oral product, when converted to the weight of a free form.

Specifically, the concentration is generally 0.001 to 5,000 ppm by weight, preferably 0.01 to 1,000 ppm by weight, more preferably 0.05 to 500 ppm by weight, further preferably 0.07 to 100 ppm by weight, further more preferably 0.1 to 50 ppm by weight.

The amount (concentration) of component (B-1) to be added to an oral product when the taste quality-improving agent (III) of the present invention is used for improving the taste quality of sweet substances is the same as above.

The amount (concentration) of component (C) sweet substance in the composition (III) of the present invention to be added to an oral product is such that the concentration at the time of eating is within a range desired from the aspect of improving the taste quality of sweet substances. For example, the component (C) sweet substance is used such that its concentration at the time of eating is generally 0.01 ppm by weight or more, preferably 0.05 ppm by weight or more, more preferably 0.1 ppm by weight or more, further preferably 1 ppm by weight or more, further more preferably 10 ppm by weight or more, and the upper limit is generally 500,000 ppm by weight or less, preferably 50,000 ppm by weight or less, more preferably 5,000 ppm by weight or less, further preferably 2,000 ppm by weight, further more preferably 1,000 ppm by weight, with respect to the total weight of the oral product.

Specifically, the concentration is generally 0.01 to 500,000 ppm by weight, preferably 0.05 to 50,000 ppm by weight, more preferably 0.1 to 5,000 ppm by weight, further preferably 1 to 2,000 ppm by weight, further more preferably 10 to 1,000 ppm by weight.

The amount (concentration) of the sweet substance in an oral product when the taste quality-improving agent (III) of the present invention is used for improving the taste quality of sweet substances is the same as above.

The amount (concentration) of component (D) in the composition (III) of the present invention to be added to an oral product is such that the concentration of the component (D) at the time of eating is within a range desired from the aspect of improving the taste quality of sweet substances. For example, it is used such that its concentration at the time of eating is generally 0.3 ppb by weight or more, preferably 0.5 ppb by weight or more, more preferably 1 ppb by weight or more, further preferably 3 ppb by weight or more, further more preferably 5 ppb by weight or more, and the upper limit is generally 200 ppb by weight or less, preferably 150 ppb by weight or less, more preferably 100 ppb by weight or less, further preferably 50 ppb by weight or less, further more preferably 20 ppb by weight or less, with respect to the total weight of the oral product.

Specifically, the concentration is generally 0.3 to 200 ppb by weight, preferably 0.5 to 150 ppb by weight, more preferably 1 to 100 ppb by weight, further preferably 3 to 50 ppb by weight, further more preferably 5 to 20 ppb by weight.

The amount (concentration) of component (D) in an oral product when the taste quality-improving agent (III) of the present invention is used for improving the taste quality of sweet substances is the same as above.

The definition of the concentration at the time of eating of component (B-1), component (C), and component (D) is the same as the aforementioned definition of the concentration at the time of eating of component (B), component (C), and component (D).

The total amount of components (B-1), (C), and (D) contained in the composition (III) of the present invention is, for example, generally 0.001% by weight or more, preferably 0.1% by weight or more, more preferably 1% by weight or more, with respect to the total weight of the composition of the present invention. The amount is generally 100% by weight or less, preferably 99.9% by weight or less, more preferably 99% by weight or less, further preferably 95% by weight or less, further more preferably 90% by weight or less, with respect to the composition of the present invention.

Specifically, the amount is generally 0.001 to 100% by weight, preferably 0.1 to 100% by weight, more preferably 1 to 100% by weight, further preferably 1 to 99.9% by weight, further more preferably 1 to 99% by weight.

The concentration and content ratio of component (B-1) in the composition (III) of the present invention can be appropriately set according to various conditions such as the kind of component (C) and component (D), and the kind of food for which the composition of the present invention is used.

The weight ratio of components (B-1), (C), and (D) ((B-3):(C):(D)) in the composition (III) of the present invention is generally 1 : 0.001-10,000 : 0.000001-1, preferably 1 : 0.01-10,000 : 0.000005-0.5, more preferably 1 : 0.05-5,000 : 0.00001-0.1, further preferably 1 : 0.1-3,000 : 0.00008-0.05, further more preferably 1 : 1-1,000 : 0.00015-0.01, when converted to the weight of a free form, from the aspect of improving the taste quality of sweet substances.

The total amount of components (B-1) and (D) contained in the taste quality-improving agent (III) of the present invention is, for example, generally 0.001% by weight or more, preferably 0.1% by weight or more, more preferably 1% by weight or more, with respect to the total weight of the taste quality-improving agent of the present invention. The amount is generally 100% by weight or less, preferably 99.9% by weight or less, more preferably 99% by weight or less, further preferably 95% by weight or less, further more preferably 90% by weight or less, with respect to the composition of the present invention.

Specifically, the amount is generally 0.001 to 100% by weight, preferably 0.1 to 100% by weight, more preferably 1 to 100% by weight, further preferably 1 to 99.9% by weight, further more preferably 1 to 99% by weight.

The concentration and content ratio of component (B-1) in the taste quality-improving agent (III) of the present invention can be appropriately set according to various conditions such as the kind of component (D) and the kind of a food for which the taste quality-improving agent of the present invention is used.

The weight ratio of components (B-1) and (D) ((B-1):(D)) in the taste quality-improving agent (III) of the present invention is generally 1 : 0.000001-1, preferably 1 : 0.000005-0.5, more preferably 1 : 0.00001-0.1, further preferably 1 : 0.00008-0.05, further more preferably 1 : 0.00015-0.01, when converted to the weight of a free form, from the aspect of improving the taste quality of sweet substances.

The composition (III) of the present invention and the taste quality-improving agent (III) of the present invention can be produced in the same manner as the aforementioned composition of the present invention and the taste quality-improving agent of the present invention, except that component (B-1) and component (D) are contained instead of components (A) and (B).

In a preferred embodiment of the composition (III) of the present invention, the amount of the composition added to an oral product, when converted to the weight of a free form, with respect to the total weight of the oral product, is within the following range:
naringenin or a salt thereof 0.001 to 5,000 ppm by weight, sweet substance 0.01 to 500,000 ppm by weight, and lactone 0.3 to 200 ppb by weight;
preferably,
naringenin or a salt thereof 0.01 to 1,000 ppm by weight, sweet substance 0.05 to 50,000 ppm by weight, and
lactone 0.5 to 150 ppb by weight;
more preferably,
naringenin or a salt thereof 0.05 to 500 ppm by weight,
sweet substance 0.1 to 5,000 ppm by weight, and
lactone 1 to 100 ppb by weight;
further preferably,
naringenin or a salt thereof 0.07 to 100 ppm by weight,
sweet substance 1 to 2,000 ppm by weight, and
lactone 3 to 50 ppb by weight;
further more preferably,
naringenin or a salt thereof 0.1 to 50 ppm by weight,
sweet substance 10 to 1,000 ppm by weight, and
lactone 5 to 20 ppb by weight.
naringenin or a salt thereof 0.001 to 5,000 ppm by weight, steviol glycoside 0.01 to 500,000 ppm by weight, and lactone 0.3 to 200 ppb by weight;
preferably,
naringenin or a salt thereof 0.01 to 1,000 ppm by weight,
steviol glycoside 0.05 to 50,000 ppm by weight, and
lactone 0.5 to 150 ppb by weight;
more preferably,
naringenin or a salt thereof 0.05 to 500 ppm by weight, steviol glycoside 0.1 to 5,000 ppm by weight, and
lactone 1 to 100 ppb by weight;
further preferably,
naringenin or a salt thereof 0.07 to 100 ppm by weight, steviol glycoside 1 to 2,000 ppm by weight, and
lactone 3 to 50 ppb by weight;
further more preferably,
naringenin or a salt thereof 0.1 to 50 ppm by weight, steviol glycoside 10 to 1,000 ppm by weight, and
lactone 5 to 20 ppb by weight.
naringenin or a salt thereof 0.001 to 5,000 ppm by weight, at least one steviol glycoside selected from the group consisting of rebaudioside A, rebaudioside D, rebaudioside M, and rebaudioside E 0.01 to 500,000 ppm by weight, and lactone 0.3 to 200 ppb by weight;
preferably,
naringenin or a salt thereof 0.01 to 1,000 ppm by weight,
at least one steviol glycoside selected from the group consisting of rebaudioside A, rebaudioside D, rebaudioside M, and rebaudioside E 0.05 to 50,000 ppm by weight, and lactone 0.5 to 150 ppb by weight;
more preferably,
naringenin or a salt thereof 0.05 to 500 ppm by weight,
at least one steviol glycoside selected from the group consisting of rebaudioside A, rebaudioside D, rebaudioside M, and rebaudioside E 0.1 to 5,000 ppm by weight, and lactone 1 to 100 ppb by weight;
further preferably,
naringenin or a salt thereof 0.07 to 100 ppm by weight,
at least one steviol glycoside selected from the group consisting of rebaudioside A, rebaudioside D, rebaudioside M, and rebaudioside E 1 to 2,000 ppm by weight, and lactone 3 to 50 ppb by weight;
further more preferably,
naringenin or a salt thereof 0.1 to 50 ppm by weight,
at least one steviol glycoside selected from the group consisting of rebaudioside A, rebaudioside D, rebaudioside M, and rebaudioside E 10 to 1,000 ppm by weight, and lactone 5 to 20 ppb by weight.

In a preferred embodiment of the taste quality-improving agent (III) of the present invention, the amount of the composition added to an oral product, when converted to the weight of a free form, with respect to the total weight of the oral product, is within the following range:
naringenin or a salt thereof 0.001 to 5,000 ppm by weight, and lactone 0.3 to 200 ppb by weight;
preferably,
naringenin or a salt thereof 0.01 to 1,000 ppm by weight, and lactone 0.5 to 150 ppb by weight;
more preferably,
naringenin or a salt thereof 0.05 to 500 ppm by weight, and lactone 1 to 100 ppb by weight;
further preferably,
naringenin or a salt thereof 0.07 to 100 ppm by weight, and lactone 3 to 50 ppb by weight;
further more preferably,
naringenin or a salt thereof 0.1 to 50 ppm by weight, and lactone 5 to 20 ppb by weight.

The method (III) of the present invention and the production method (III) of the present invention can be performed in the same manner as the aforementioned method of the present invention and the production method of the present invention, except that components (B-1) and (D) are added instead of components (A) and (B).

The amounts of components (B-1) and (D) to be added to an oral product (amounts of components (B-1) and (D) to be added to an oral product) and preferable ranges thereof in the method (III) of the present invention and the production method (III) of the present invention are as described above.

The content of the sweet substance in an oral product (amount of the sweet substance to be added to an oral product) and preferable range thereof in the method (III) of the present invention and the production method (III) of the present invention are as described above.

The contents of components (B-1), (C), and (D) in an oral product (amounts of components (B-1), (C), and (D) to be added to an oral product) and preferable ranges thereof in the oral product (III) of the present invention are as described above.

### [Example]

The present invention is described in more detail in the following Examples; however, the present invention is not limited by these examples in any way.

When "%", "ppm", "ppb" are indicated in the present specification, they mean "% by weight", "ppm by weight", and "ppb by weight", respectively, unless otherwise specified.

### (Example 1) Taste quality-improving effects of flavonoids and γ-glutamyl peptide on sweet substance

### 1. Preparation of evaluation sample

### (1) Preparation of evaluation base solution (negative control solution)

Rebaudioside A (MORITA KAGAKU KOGYO CO., LTD.) was dissolved in filtered water (ion exchange water) to prepare a 720 ppm aqueous solution of rebaudioside A, which was used as the negative control (NC) solution.

### (2) Preparation of positive control solution

Sucrose (Mitsui DM Sugar Co., Ltd.) was dissolved in filtered water to prepare a 7.5% aqueous solution of sucrose, which was used as the positive control (PC) solution.

### 2. Experiment method

Sweet solutions prepared by adding each compound (naringenin (Penta Manufacturing Company), hesperetin (Xi'an International Healthcare Factory Co., Ltd.), pinocembrin (Shaanxi Ebony Biotech Co., Ltd.), γ-Glu-Val-Gly (AJINOMOTO CO., INC.), γ-Glu-Abu (AJINOMOTO CO., INC.), yeast extract containing γ-Glu-Abu, γ-nonalactone (Sigma-Aldrich Co. LLC.)) to NC solution at the concentrations indicated in Tables 1 to 5 were evaluated by sensory evaluation.

The yeast extract containing γ-Glu-Abu used in this example was a powdered yeast extract containing 7 to 13%(w/w) γ-Glu-Abu based on dry weight, which was produced in accordance with the method described in WO 2012/046731 or "Savorboost (product name) yeast extract containing γ-Glu-Abu (Asahi Group Foods, Ltd.)". In Tables 1-4, the concentration of the yeast extract containing γ-Glu-Abu added is shown as a value converted to the amount of γ-Glu-Abu in the yeast extract.

The taste quality of the PC solution (7.5% sucrose) was scored as 10.0 points, the taste quality of the NC solution (720 ppm rebaudioside A) was scored as 1.0 points, and the sensory evaluation score for each sample was evaluated in 0.1 point increments. The taste quality was evaluated including sweetness intensity, intensity of bitter taste, and intensity of lingering sweetness. Samples with an evaluation score of 3 or higher were deemed to have a taste quality-improving effect. The evaluation was performed by a panel of four people who had received sensory evaluation training, and was conducted by blind evaluation. The average evaluation score of all panel members was calculated and addition effect was examined.

In addition, to compare with the addition effect of a single component, a theoretical additive point was calculated and compared with the evaluation score when the components were added in combination to examine the presence or absence of a synergistic effect.

In addition, the presence or absence of odor was evaluated by putting each sample in the mouth and evaluating the retronasal aroma that could be perceived. When two or more of the four people detected the odor, it was evaluated as "odor present" and when 0 or 1 person detected the odor, it was rated as "no odor".

The results are shown in Tables 1 to 5.

**[Table 1]**

| | test sample | naringenin (ppm) | γ-Glu-Val-Gly (ppm) | γ-Glu-Abu (ppm) | γ-Glu-Abu amount (ppm) in yeast extract | evaluation score (points) | theoretical additive point (points) | synergistic effect (points) | odor |
|---|---|---|---|---|---|---|---|---|---|
| PC | 7.5% sucrose | - | - | - | - | 10.0 | | | no odor |
| NC | 720 ppm rebaudioside A | - | - | - | - | 1.0 | | | no odor |
| 1 | NC+naringenin | 0.1 | - | - | - | 1.1 | | | no odor |
| 2 | NC+naringenin | 0.5 | - | - | - | 1.2 | | | no odor |
| 3 | NC+naringenin | 1 | - | - | - | 1.6 | | | no odor |
| 4 | NC+naringenin | 5 | - | - | - | 2.1 | | | no odor |
| 5 | NC+naringenin | 10 | - | - | - | 4.0 | | | no odor |
| 6 | NC+naringenin | 30 | - | - | - | 5.0 | | | no odor |
| 7 | NC+γ-Glu-Val-Gly | - | 0.3 | - | - | 1.7 | | | no odor |
| 8 | NC+γ-Glu-Val-Gly | - | 5 | - | - | 3.2 | | | no odor |
| 9 | NC+γ-Glu-Abu | - | - | 1 | - | 1.7 | | | no odor |
| 10 | NC+γ-Glu-Abu | - | - | 5 | - | 2.7 | | | no odor |
| 11 | NC+γ-Glu-Abu | - | - | 10 | - | 3.5 | | | no odor |
| 12 | NC+yeast extract containing γ-Glu-Abu | - | - | - | 0.8 | 2.3 | | | odor present |
| 13 | NC+yeast extract containing γ-Glu-Abu | - | - | - | 4 | 2.5 | | | odor present |
| 14 | NC+yeast extract containing γ-Glu-Abu | - | - | - | 8 | 2.5 | | | odor present |

**[Table 2]**

| | test sample | naringenin (ppm) | γ-Glu-Val-Gly (ppm) | γ-Glu-Abu (ppm) | γ-Glu-Abu amount (ppm) in yeast extract | evaluation score (points) | theoretical additive point (points) | synergistic effect (points) | odor |
|---|---|---|---|---|---|---|---|---|---|
| PC | 7.5% sucrose | - | - | - | - | 10.0 | | | no odor |
| NC | 720 ppm rebaudioside A | - | - | - | - | 1.0 | | | no odor |
| 15 | NC+naringenin+γ-Glu-Val-Gly | 5 | 0.3 | - | - | 5.0 | 2.8 | 2.2 | no odor |
| 16 | NC+naringenin+γ-Glu-Val-Gly | 30 | 5 | - | - | 5.8 | 7.2 | -1.4 | no odor |
| 17 | NC+naringenin+γ-Glu-Abu | 5 | - | 1 | - | 3.9 | 2.8 | 1.1 | no odor |
| 18 | NC+naringenin+yeast extract containing γ-Glu-Abu | 5 | - | - | 0.8 | 4.6 | 3.4 | 1.2 | no odor |
| 19 | NC+naringenin+γ-Glu-Abu | 30 | - | 10 | - | 6.3 | 7.5 | -1.2 | no odor |
| 20 | NC+naringenin+yeast extract containing γ-Glu-Abu | 30 | - | - | 8 | 6.4 | 6.5 | -0.1 | odor present |
| 21 | NC+naringenin+yeast extract containing γ-Glu-Abu | 10 | - | - | 0.8 | 6.9 | 5.3 | 1.6 | odor present |
| 22 | NC+naringenin+γ-Glu-Abu | 0.1 | - | 1 | - | 1.9 | 1.8 | 0.1 | no odor |
| 23 | NC+naringenin+γ-Glu-Abu | 0.5 | - | 1 | - | 2.5 | 1.9 | 0.6 | no odor |
| 24 | NC+naringenin+γ-Glu-Abu | 1 | - | 1 | - | 3.0 | 2.3 | 0.7 | no odor |
| 25 | NC+naringenin+yeast extract containing γ-Glu-Abu | 0.1 | - | - | 0.8 | 2.3 | 2.5 | -0.1 | no odor |
| 26 | NC+naringenin+yeast extract containing γ-Glu-Abu | 0.5 | - | - | 0.8 | 2.8 | 2.6 | 0.2 | no odor |
| 27 | NC+naringenin+yeast extract containing γ-Glu-Abu | 1 | - | - | 0.8 | 3.2 | 2.9 | 0.3 | no odor |

**[Table 3]**

| | test sample | hesperetin (ppm) | γ-Glu-Val-Gly (ppm) | γ-Glu-Abu (ppm) | γ-Glu-Abu amount (ppm) in yeast extract | evaluation score (points) | theoretical additive point (points) | synergistic effect (points) | odor |
|---|---|---|---|---|---|---|---|---|---|
| PC | 7.5% sucrose | - | - | - | - | 10.0 | | | no odor |
| NC | 720 ppm rebaudioside A | - | - | - | - | 1.0 | | | no odor |
| 28 | NC+hesperetin | 5 | - | - | - | 2.0 | | | no odor |
| 29 | NC+hesperetin | 10 | - | - | - | 3.8 | | | no odor |
| 30 | NC+hesperetin+γ-Glu-Val-Gly | 5 | 0.3 | - | - | 5.0 | 2.7 | 2.3 | no odor |
| 31 | NC+hesperetin+γ-Glu-Abu | 5 | - | 1 | - | 4.3 | 2.7 | 1.6 | no odor |
| 32 | NC+hesperetin+yeast extract containing γ-Glu-Abu | 5 | - | - | 0.8 | 4.6 | 3.3 | 1.3 | no odor |
| 33 | NC+hesperetin+γ-Glu-Abu | 10 | - | 10 | - | 5.2 | 6.3 | -1.1 | no odor |
| 34 | NC+hesperetin+yeast extract containing γ-Glu-Abu | 10 | - | - | 8 | 4.9 | 5.3 | -0.4 | odor present |

**[Table 4]**

| | test sample | pinocembrin (ppm) | γ-Glu-Val-Gly (ppm) | γ-Glu-Abu (ppm) | γ-Glu-Abu amount (ppm) in yeast extract | evaluation score (points) | theoretical additive point (points) | synergistic effect (points) | odor |
|---|---|---|---|---|---|---|---|---|---|
| PC | 7.5% sucrose | - | - | - | - | 10.0 | | | no odor |
| NC | 720 ppm rebaudioside A | - | - | - | - | 1.0 | | | no odor |
| 35 | NC+pinocembrin | 5 | - | - | - | 1.8 | | | no odor |
| 36 | NC+pinocembrin | 10 | - | - | - | 3.4 | | | no odor |
| 37 | NC+pinocembrin+γ-Glu-Val-Gly | 5 | 0.3 | - | - | 5.0 | 2.5 | 2.5 | no odor |
| 38 | NC+pinocembrin+γ-Glu-Abu | 5 | - | 1 | - | 3.6 | 2.5 | 1.1 | no odor |
| 39 | NC+pinocembrin+yeast extract containing γ-Glu-Abu | 5 | - | - | 0.8 | 4.3 | 3.1 | 1.2 | no odor |
| 40 | NC+pinocembrin+γ-Glu-Abu | 10 | - | 10 | - | 5.3 | 5.9 | -0.6 | no odor |
| 41 | NC+pinocembrin+yeast extract containing γ-Glu-Abu | 10 | - | - | 8 | 5.1 | 4.9 | 0.2 | odor present |

**[Table 5]**

| | test sample | naringenin (ppm) | γ-Glu-Val-Gly (ppm) | γ-nonalactone (ppb) | evaluation score (points) | theoretical additive point (points) | synergistic effect (points) | odor |
|---|---|---|---|---|---|---|---|---|
| PC | 7.5% sucrose | - | - | - | 10.0 | - | - | no odor |
| NC | 720 ppm rebaudioside A | - | - | - | 1.0 | - | - | no odor |
| 42 | NC+γ-nonalactone | - | - | 7.5 | 2.0 | - | - | no odor |
| 43 | NC+naringenin+γ-nonalactone | 5 | - | 7.5 | 2.5 | 3.1 | -0.6 | no odor |
| 44 | NC+naringenin+γ-nonalactone | 30 | - | 7.5 | 5.3 | 6.0 | -0.7 | no odor |
| 45 | NC+naringenin+γ-Glu-Val-Gly+γ-nonalactone | 5 | 0.3 | 7.5 | 5.4 | 3.8 | 1.6 | no odor |
| 46 | NC+naringenin+γ-Glu-Val-Gly+γ-nonalactone | 30 | 5 | 7.5 | 6.1 | 8.2 | -2.1 | no odor |

As is clear from the above-mentioned results, it was found that the addition of 5 ppm of naringenin, hesperetin, or pinocembrin in combination with 0.3 ppm γ-Glu-Val-Gly synergistically improved the taste quality of rebaudioside A to a taste quality closer to that of PC sucrose. In addition, it was found that the addition of naringenin, hesperetin, or pinocembrin in combination with γ-Glu-Abu or a yeast extract containing γ-Glu-Abu synergistically improved the taste quality of rebaudioside A to a taste quality closer to that of PC sucrose. It was also found that the combination of pinocembrin and rebaudioside A improved the taste quality of rebaudioside A to a taste quality closer to that of PC sucrose. Furthermore, it was found that the combination of naringenin, γ-Glu-Val-Gly, and γ-nonalactone improved the taste quality of rebaudioside A to a taste quality closer to that of PC sucrose. Furthermore, it was found that the combination of naringenin and γ-nonalactone improved the taste quality of rebaudioside A to a taste quality closer to that of PC sucrose.

### [Industrial Applicability]

According to the present invention, a sweetener composition and an oral product (food, pharmaceutical product, quasi-drug, etc.) with improved taste quality of a sweet substance can be provided.

This application is based on a patent application No. 2023-134086 filed in Japan (filing date: August 21, 2023), the contents of which are incorporated in full herein.

## Claims

1. A sweetener composition comprising the following components (A), (B), and (C):
(A) at least one γ-glutamyl peptide selected from the group consisting of a compound represented by the formula (I):
γ-Glu-X-Gly (I)
wherein X is an amino acid residue or an amino acid derivative residue, and
a compound represented by the formula (II):
γ-Glu-Y (II)
wherein Y is an amino acid residue or an amino acid derivative residue,
or a salt thereof,
(B) at least one compound selected from the group consisting of naringenin, hesperetin, and pinocembrin, or a salt thereof, and
(C) a sweet substance.

2. The composition according to claim 1, wherein the component (A) is at least one γ-glutamyl peptide selected from the group consisting of γ-Glu-Val-Gly and γ-Glu-Abu, or a salt thereof.

3. The composition according to claim 1, wherein the sweet substance is steviol glycoside.

4. The composition according to claim 1, wherein the component (B) is naringenin or a salt thereof.

5. The composition according to claim 1, wherein the component (B) is hesperetin or a salt thereof.

6. The composition according to claim 1, wherein the component (B) is pinocembrin or a salt thereof.

7. The composition according to any one of claims 1 to 6, further comprising a lactone.

8. An agent for improving taste quality of a sweet substance, comprising the following components (A) and (B):
(A) at least one γ-glutamyl peptide selected from the group consisting of a compound represented by the formula (I):
γ-Glu-X-Gly (I)
wherein X is an amino acid residue or an amino acid derivative residue, and
a compound represented by the formula (II):
γ-Glu-Y (II)
wherein Y is an amino acid residue or an amino acid derivative residue,
or a salt thereof, and
(B) at least one compound selected from the group consisting of naringenin, hesperetin, and pinocembrin, or a salt thereof.

9. The agent according to claim 8, wherein the component (A) is at least one γ-glutamyl peptide selected from the group consisting of γ-Glu-Val-Gly and γ-Glu-Abu, or a salt thereof.

10. The agent according to claim 8, wherein the sweet substance is steviol glycoside.

11. The agent according to claim 8, wherein the component (B) is naringenin or a salt thereof.

12. The agent according to claim 8, wherein the component (B) is hesperetin or a salt thereof.

13. The agent according to claim 8, wherein the component (B) is pinocembrin or a salt thereof.

14. The agent according to any one of claims 8 to 13, further comprising a lactone.

15. A method for improving taste quality of a sweet substance, comprising adding the following component (A) and (B) to an oral product containing the sweet substance:
(A) at least one γ-glutamyl peptide selected from the group consisting of a compound represented by the formula (I):
γ-Glu-X-Gly (I)
wherein X is an amino acid residue or an amino acid derivative residue, and
a compound represented by the formula (II):
γ-Glu-Y (II)
wherein Y is an amino acid residue or an amino acid derivative residue,
or a salt thereof, and
(B) at least one compound selected from the group consisting of naringenin, hesperetin, and pinocembrin, or a salt thereof.

16. The method according to claim 15, wherein the component (A) is at least one γ-glutamyl peptide selected from the group consisting of γ-Glu-Val-Gly and γ-Glu-Abu, or a salt thereof.

17. The method according to claim 15, wherein the sweet substance is steviol glycoside.

18. The method according to claim 15, wherein the component (B) is naringenin or a salt thereof.

19. The method according to claim 15, wherein the component (B) is hesperetin or a salt thereof.

20. The method according to claim 15, wherein the component (B) is pinocembrin or a salt thereof.

21. The method according to any one of claims 15 to 20, further comprising adding a lactone to the oral product.

22. A method for producing an oral product with improved taste quality of a sweet substance, comprising adding the following component (A) and (B) to an oral product containing the sweet substance:
(A) at least one γ-glutamyl peptide selected from the group consisting of a compound represented by the formula (I):
γ-Glu-X-Gly (I)
wherein X is an amino acid residue or an amino acid derivative residue, and
a compound represented by the formula (II):
γ-Glu-Y (II)
wherein Y is an amino acid residue or an amino acid derivative residue,
or a salt thereof, and
(B) at least one compound selected from the group consisting of naringenin, hesperetin, and pinocembrin, or a salt thereof.

23. The method according to claim 22, wherein the component (A) is at least one γ-glutamyl peptide selected from the group consisting of γ-Glu-Val-Gly and γ-Glu-Abu, or a salt thereof.

24. The method according to claim 22, wherein the sweet substance is steviol glycoside.

25. The method according to claim 22, wherein the component (B) is naringenin or a salt thereof.

26. The method according to claim 22, wherein the component (B) is hesperetin or a salt thereof.

27. The method according to claim 22, wherein the component (B) is pinocembrin or a salt thereof.

28. The method according to any one of claims 22 to 27, further comprising adding a lactone to the oral product.

29. An oral product comprising the following components (A), (B), and (C):
(A) at least one γ-glutamyl peptide selected from the group consisting of a compound represented by the formula (I):
γ-Glu-X-Gly (I)
wherein X is an amino acid residue or an amino acid derivative residue, and
a compound represented by the formula (II):
γ-Glu-Y (II)
wherein Y is an amino acid residue or an amino acid derivative residue,
or a salt thereof,
(B) at least one compound selected from the group consisting of naringenin, hesperetin, and pinocembrin, or a salt thereof, and
(C) a sweet substance.

30. The oral product according to claim 29, wherein the component (A) is at least one γ-glutamyl peptide selected from the group consisting of γ-Glu-Val-Gly and γ-Glu-Abu, or a salt thereof.

31. The oral product according to claim 29, wherein the sweet substance is steviol glycoside.

32. The oral product according to claim 29, wherein the component (B) is naringenin or a salt thereof.

33. The oral product according to claim 29, wherein the component (B) is hesperetin or a salt thereof.

34. The oral product according to claim 29, wherein the component (B) is pinocembrin or a salt thereof.

35. The oral product according to any one of claims 29 to 34, further comprising a lactone.

36. A sweetener composition comprising the following components (B-3) and (C):
(B-3) pinocembrin or a salt thereof, and
(C) a sweet substance.

37. The composition according to claim 36, wherein the sweet substance is steviol glycoside.

38. An agent for improving taste quality of a sweet substance, comprising pinocembrin or a salt thereof.

39. The agent according to claim 38, wherein the sweet substance is steviol glycoside.

40. A method for improving taste quality of a sweet substance, comprising adding pinocembrin or a salt thereof to an oral product containing the sweet substance.

41. The method according to claim 40, wherein the sweet substance is steviol glycoside.

42. A method for producing an oral product with improved taste quality of a sweet substance, comprising adding pinocembrin or a salt thereof to an oral product containing the sweet substance.

43. The method according to claim 42, wherein the sweet substance is steviol glycoside.

44. An oral product comprising the following components (B-3) and (C):
(B-3) pinocembrin or a salt thereof, and
(C) a sweet substance.

45. The oral product according to claim 44, wherein the sweet substance is steviol glycoside.
